(19) Europäisches Patentamt
European Patent Office
Office européen des brevets

(11) **EP 3 732 472 B1**

(12) **EUROPÄISCHE PATENTSCHRIFT**

(45) Veröffentlichungstag und Bekanntmachung des Hinweises auf die Patenterteilung:
**31.08.2022   Patentblatt 2022/35**

(21) Anmeldenummer: **18830758.1**

(22) Anmeldetag: **13.12.2018**

(51) Internationale Patentklassifikation (IPC):
**G01N 27/02** *(2006.01)*      **G01N 27/22** *(2006.01)*

(52) Gemeinsame Patentklassifikation (CPC):
**G01N 27/026; G01N 27/22**

(86) Internationale Anmeldenummer:
**PCT/EP2018/084774**

(87) Internationale Veröffentlichungsnummer:
**WO 2019/129503 (04.07.2019 Gazette 2019/27)**

(54) **VERFAHREN ZUM BESTIMMEN EINES AGGREGATZUSTANDES EINER WÄSSRIGEN BETRIEBSFLÜSSIGKEIT IN EINEM BETRIEBSFLÜSSIGKEITSBEHÄLTER FÜR EIN KRAFTFAHRZEUG UND BETRIEBSFLÜSSIGKEITSBEHÄLTER**

METHOD FOR DETERMINING AN AGGREGATE STATE OF AN AQUEOUS OPERATING LIQUID IN AN OPERATING LIQUID CONTAINER FOR A MOTOR VEHICLE, AND OPERATING LIQUID CONTAINER

PROCÉDÉ PERMETTANT DE DÉTERMINER UN ÉTAT D'AGRÉGATION D'UN LIQUIDE DE FONCTIONNEMENT AQUEUX DANS UN RÉCIPIENT DE LIQUIDE DE FONCTIONNEMENT DESTINÉ À UN VÉHICULE AUTOMOBILE ET RÉCIPIENT DE LIQUIDE DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.12.2017   DE 102017131390**

(43) Veröffentlichungstag der Anmeldung:
**04.11.2020   Patentblatt 2020/45**

(73) Patentinhaber: **Kautex Textron GmbH & Co. KG**
**53229 Bonn (DE)**

(72) Erfinder:
• **KRIEGER, Karl-Ludwig**
**26835 Brinkum (DE)**
• **HAPPEL, Jakob**
**29614 Soldau (DE)**
• **WOLF, Hartmut**
**53639 Königswinter (DE)**

(74) Vertreter: **Richly & Ritschel Patentanwälte PartG mbB**
**Sattlerweg 20**
**51429 Bergisch Gladbach (DE)**

(56) Entgegenhaltungen:
DE-A1-102012 020 335     JP-A- H 075 135
JP-A- 2004 184 192     JP-A- 2009 110 849
JP-A- 2015 040 841

• FLATSCHER M ET AL: "Measurement of complex dielectric material properties of ice using electrical impedance spectroscopy", 2016 IEEE SENSORS, IEEE, 30. Oktober 2016 (2016-10-30), Seiten 1-3, XP033036818, DOI: 10.1109/ICSENS.2016.7808533

**Beschreibung**

Die vorliegende Erfindung betrifft ein Verfahren zum Bestimmen eines Aggregatzustandes einer wässrigen Betriebsflüssigkeit in einem Betriebsflüssigkeitsbehälter für ein Kraftfahrzeug. Ferner betrifft die vorliegende Erfindung einen Betriebsflüssigkeitsbehälter zum Durchführen des Verfahrens.

Im Folgenden wird auch auf als Wasserbehälter ausgebildete Betriebsflüssigkeitsbehälter Bezug genommen, die für den Einsatz in einem Kraftfahrzeug ausgebildet sind. Betriebsflüssigkeitsbehälter im Sinne der Erfindung sind insbesondere aber nicht ausschließlich Wasserbehälter für Kraftfahrzeuge zur Bevorratung von beispielsweise in einen Ansaugtrakt einer Brennkraftmaschine zu injizierendes Wasser, Harnstoffbehälter, Wischwasserbehälter, Nebenflüssigkeitsbehälter oder Additivbehälter für Kraftfahrzeuge. Behälter der eingangs genannten Art werden häufig durch Extrusionsblasformen hergestellt, wobei sich insbesondere HDPE (High Density Polyethylene) für die Herstellung extrusionsblasgeformter Behälter eignet. Ferner ist es möglich, entsprechende Betriebsflüssigkeitsbehälter mittels eines Spritzgießverfahrens herzustellen.

Die Wassereinspritzung ist ein Verfahren zur Leistungssteigerung von Verbrennungskraftmaschinen. Um die Maximaltemperatur bei Höchstleistung nicht zu überschreiten, wird destilliertes Wasser in den Ansaugtrakt einer Verbrennungskraftmaschine eingespritzt. Die verdunstende Flüssigkeit hat eine kühlende Wirkung und vermindert die Verdichtungsarbeit. Auch eine Einspritzung während des Verbrennungstaktes zur Dampfkrafterzeugung und zur Reduktion der Abgastemperatur und damit zur Reduktion des Abgasgegendruckes wird praktiziert. Mittels Wassereinspritzung kann der Schadstoffausstoß, insbesondere von Stickoxiden, von Verbrennungsmotoren gesenkt werden. Das in den Luft-Ansaugtrakt eingespritzte Wasser bewirkt durch die aufzubringende Verdunstungswärme eine effektive Ladeluftkühlung und erreicht dadurch auch eine Innenkühlung des Motors. Durch die kältere Verbrennungsluft und damit deren höhere Dichte ergibt sich eine Leistungssteigerung.

Voraussetzung für die Wassereinspritzung ist, dass das im Betriebsflüssigkeitsbehälter bevorratete Wasser einen flüssigen Aggregatzustand aufweist, so dass das Wasser mittels einer Pumpe gefördert werden kann. Selbiges gilt beispielsweise auch für eine in einem Betriebsflüssigkeitsbehälter bevorratete Harnstofflösung. Bei Temperaturen um den Gefrierpunkt kann das Wasser innerhalb des Betriebsflüssigkeitsbehälters einen teilweise festen und teilweise flüssigen Aggregatzustand aufweisen, so dass unter Umständen eine Förderung des Wassers mittels einer Pumpe möglich sein kann. Bei Temperaturen deutlich unterhalb des Gefrierpunktes ist die Betriebsflüssigkeit zu einem großen Teil oder komplett gefroren, so dass eine Förderung der wässrigen Betriebsflüssigkeit nicht möglich ist. Sobald die Betriebsflüssigkeit einen teilweise festen Aggregatzustand aufweist, sobald sich also Eis im Betriebsflüssigkeitsbehälter befindet, ist eine Förderung der Betriebsflüssigkeit nicht mehr sichergestellt, so dass Gegenmaßnahmen getroffen werden müssen. Zum einen kann ein Betrieb des Kraftfahrzeugs verhindert werden, solange die Betriebsflüssigkeit nicht gefördert werden kann. Ferner wird eine Heizeinrichtung zum Aufwärmen der sich im Betriebsflüssigkeitsbehälter befindlichen Betriebsflüssigkeit aktiviert.

Aus dem Stand der Technik ist eine Vielzahl von Verfahren zum Bestimmen eines Aggregatzustandes einer wässerigen Betriebsflüssigkeit in einem Behälter bekannt, beispielsweise aus der JP 2009110849 A, JP H075135 A, DE 102012020335 A1, JP 2004184192 A und EP 1596188 A2, oder in Flatscher M et al. "Measurement of complex dielectric material properties of ice using electrical impedance spectroscopy",2016 IEEE Sensors, 30. Oktober 2016, Seiten 1-3.

Der vorliegenden Erfindung liegt die Aufgabe zugrunde, ein Verfahren zum Bestimmen eines Aggregatzustandes einer wässrigen Betriebsflüssigkeit in einem Betriebsflüssigkeitsbehälter für ein Kraftfahrzeug bereitzustellen.

Die der vorliegenden Erfindung zugrundeliegende Aufgabe wird durch ein Verfahren mit den Merkmalen des Anspruchs 1 gelöst. Vorteilhafte Ausgestaltungen des Verfahrens sind in den von Anspruch 1 abhängigen Ansprüchen 2 bis 5 beschrieben.

Im Genaueren wird die der vorliegenden Erfindung zugrundeliegende Aufgabe durch ein Verfahren zum Bestimmen eines Aggregatzustandes einer Betriebsflüssigkeit in einem Betriebsflüssigkeitsbehälter für ein Kraftfahrzeug gemäß Anspruch 1 gelöst, wobei der Betriebsflüssigkeitsbehälter zumindest einen an einer Behälterwand des Betriebsflüssigkeitsbehälters befestigten Kondensator mit einer ersten Elektrode und einer dieser gegenüberliegenden zweiten Elektrode aufweist. Das erfindungsgemäße Verfahren weist die folgenden

Verfahrensschritte A, B, C, D, E, F, G und H auf:

A) Anlegen von zumindest einer ersten Wechselspannung an den Kondensator, wobei eine erste Frequenz der ersten Wechselspannung einer unteren Grenzfrequenz entspricht;
B) Bestimmen und Speichern einer ersten Impedanz des Kondensators für die erste Frequenz;
C) Bestimmen eines ersten Phasenwinkels aus der ersten Impedanz; und
D) Bestimmen, dass die im Betriebsflüssigkeitsbehälter befindliche Betriebsflüssigkeit einen festen Aggregatzustand aufweist, wenn der erste Phasenwinkel größer als ein erster Grenzwinkel ist;
E) Anlegen einer zweiten Wechselspannung an den Kondensator, wobei eine zweite Frequenz der zweiten Wechselspannung einer oberen Grenzfrequenz entspricht;

F) Bestimmen und Speichern einer zweiten Impedanz des Kondensators für die zweite Frequenz;

G) Bestimmen eines zweiten Phasenwinkels aus der zweiten Impedanz; und

H) Bestimmen, dass die im Betriebsflüssigkeitsbehälter befindliche Betriebsflüssigkeit teilweise einen festen und teilweise einen flüssigen Aggregatzustand aufweist, wenn der erste Phasenwinkel kleiner als der erste Grenzwinkel und eine Differenz zwischen dem zweiten Phasenwinkel und dem ersten Phasenwinkel größer als ein zweiter Grenzwinkel ist.

Das erfindungsgemäße Verfahren weist den Vorteil auf, dass eine Bestimmung bzw. Ermittlung, ob die im Betriebsflüssigkeitsbehälter bevorratete Betriebsflüssigkeit einen festen Aggregatzustand aufweist und somit als Eis vorliegt, zuverlässig ohne direkten Kontakt einer Messeinrichtung, im vorliegenden Fall des Kondensators, mit der Betriebsflüssigkeit ermöglicht ist. Die Impedanz des zumindest einen Kondensators und der sich aus der Impedanz ergebende Phasenwinkel korrelieren mit dem Aggregatzustand der im Betriebsflüssigkeitsbehälter bevorrateten Betriebsflüssigkeit. Somit kann durch Bestimmen der Impedanz und/oder des sich aus der Impedanz ergebenden Phasenwinkels auf den Aggregatzustand der im Betriebsflüssigkeitsbehälterinnenraum befindlichen Betriebsflüssigkeit rückgeschlossen werden.

Die frequenzabhängige Impedanz des Kondensators und der sich aus der Impedanz ergebende Phasenwinkel hängen von den Relaxationsfrequenzen der Materialien ab, die von dem elektrischen Wechselfeld zwischen der ersten Elektrode und der zweiten Elektrode durchdrungen werden. Somit hängen die frequenzabhängige Impedanz des Kondensators und der sich aus der Impedanz ergebende Phasenwinkel von dem Material der Behälterwand und von der im Betriebsflüssigkeitsbehälterinnenraum befindlichen Betriebsflüssigkeit ab. Folglich hängen die frequenzabhängige Impedanz des Kondensators und der sich aus der Impedanz ergebende Phasenwinkel von Relaxationsfrequenzen der Orientierungspolarisation der Wassermoleküle der Betriebsflüssigkeit ab. Während die Relaxationsfrequenz für Wasser im flüssigen Aggregatzustand im Bereich von einigen GHz liegt, liegt die Relaxationsfrequenz für Wasser im festen Aggregatzustand, also für Eis im Bereich von einigen kHz.

Die Anmeldmelderin hat herausgefunden, dass die frequenzabhängige Größe und der frequenzabhängige Verlauf des sich aus der Impedanz des Kondensators ergebenden Phasenwinkels eindeutige Rückschlüsse auf den Aggregatzustand der im Betriebsflüssigkeitsbehälter bevorrateten Betriebsflüssigkeit ermöglichen. So hat die Anmelderin festgestellt, dass der sich aus der Impedanz des Kondensators ergebende Phasenwinkel für eine Frequenz der Wechselspannung, die einer unteren Grenzfrequenz entspricht, größer als ein vorbestimmter erster Grenzwinkel ist, wenn die Betriebsflüssigkeit innerhalb des Betriebsflüssigkeitsbehälters einen festen Aggregatzustand aufweist. Dabei hängen die untere Grenzfrequenz der an den Kondensator angelegten Wechselspannung von der Geometrie des Kondensators und der Größe der Elektroden des Kondensators und dem Abstand der Elektroden des Kondensators voneinander ab.

Vorzugsweise beträgt der erste Grenzwinkel -85°. Die untere Grenzfrequenz beträgt vorzugsweise 10 kHz. Somit beträgt der sich aus der Impedanz des Kondensators ergebende Phasenwinkel mindestens -85° bei einer an den Kondensator angelegten Wechselspannung, die eine Frequenz von 10 kHz aufweist, wenn die Betriebsflüssigkeit im Betriebsflüssigkeitsbehälter einen festen Aggregatzustand aufweist, wenn also die wässrige Betriebsflüssigkeit gefroren ist und als Eis vorliegt.

Der Betriebsflüssigkeitsbehälter ist vorzugsweise ein Betriebsflüssigkeitsbehälter für ein Kraftfahrzeug. Weiter vorzugsweise ist der Betriebsflüssigkeitsbehälter als Wasserbehälter für ein Kraftfahrzeug zur Aufnahme von Wasser ausgebildet, das zur Injektion in eine Brennkraftmaschine des Kraftfahrzeugs vorgesehen ist. Weiter vorzugsweise ist der Betriebsflüssigkeitsbehälter als Harnstoffbehälter zur Aufnahme einer wässrigen Harnstofflösung ausgebildet, die zur Injektion in den Abgasstrang einer Verbrennungskraftmaschine vorgesehen ist.

Vorzugsweise wird ein Stoppsignal ausgegeben, wenn der erste Phasenwinkel größer als der erste Grenzwinkel ist. Durch Ausgabe des Stoppsignals kann ein Betrieb des Kraftfahrzeugs verhindert werden.

Bei dem Verfahrensschritt A ist die untere Grenzfrequenz von der Geometrie und den Abmessungen des Kondensators abhängig und kann daher variieren. Insbesondere beträgt die untere Grenzfrequenz 10 kHz.

Der Phasenwinkel ist der Winkel zwischen der am Kondensator anliegenden Spannung und des durch den Kondensator fließenden Stroms.

Folglich wird im Verfahrensschritt C der Phasenwinkel zwischen der Spannung und dem Strom bestimmt.

Unter einem Verlustwinkel ist die Differenz von -90° und dem Phasenwinkel der Impedanz zu verstehen.

Folglich lässt sich der Verfahrensschritt C dann auch wie folgt formulieren: Bestimmen eines ersten Verlustwinkels des Kondensators für die erste Frequenz. Der Verfahrensschritt D lässt sich dann wie folgt ausdrücken: Bestimmen, dass die im Betriebsflüssigkeitsbehälter befindliche Betriebsflüssigkeit einen festen Aggregatzustand aufweist, wenn der erste Verlustwinkel größer als ein erster Grenzverlustwinkel ist.

Vorzugsweise beträgt der erste Grenzverlustwinkel 5°. Die untere Grenzfrequenz beträgt vorzugsweise 10 kHz. Somit beträgt der sich aus der Impedanz des Kondensators ergebende Verlustwinkel mindestens 5° bei einer an den Kondensator angelegten Wechselspannung, die eine Frequenz von 10 kHz aufweist, wenn die Betriebsflüssigkeit im Betriebsflüssigkeitsbehälter einen festen Aggregatzustand aufweist, wenn also die wässrige Betriebsflüssigkeit gefroren ist und als Eis vorliegt.

Das entsprechend ausgebildete Verfahren weist den Vorteil auf, dass eine Bestimmung bzw. Ermittlung, ob die im Betriebsflüssigkeitsbehälter bevorratete Betriebsflüssigkeit einen teilweise festen und einen teilweise flüssigen Aggregatzustand aufweist, zuverlässig ohne direkten Kontakt des Kondensators mit der Betriebsflüssigkeit ermöglicht ist. Ein Zustand, in dem die im Betriebsflüssigkeitsbehälter bevorratete wässrige Betriebsflüssigkeit teilweise in flüssiger und teilweise in gefrorener Form vorliegt, ist insbesondere bei Temperaturen im Bereich des Gefrierpunktes der Betriebsflüssigkeit gegeben.

Vorzugsweise wird im Verfahrensschritt H oder dem Verfahrensschritt H nachfolgend ein Warnsignal ausgegeben. Das Warnsignal wird folglich dann ausgegeben, wenn die im Betriebsflüssigkeitsbehälter bevorratete Betriebsflüssigkeit teilweise im festen und teilweise im flüssigen Aggregatzustand vorliegt.

Durch Ausgabe eines Warnsignals kann ein Benutzer des Kraftfahrzeugs, in dem der Betriebsflüssigkeitsbehälter verbaut ist, darauf hingewiesen werden kann, dass die im Betriebsflüssigkeitsbehälterinnenraum befindliche Betriebsflüssigkeit zumindest teilweise gefroren ist. Durch Ausgabe des Warnsignals kann insbesondere die Aktivierung einer Heizeinrichtung zum Aufheizen der im Betriebsflüssigkeitsbehälter bevorrateten Betriebsflüssigkeit erfolgen.

Sowohl die untere Grenzfrequenz als auch die obere Grenzfrequenz sind von der Geometrie und den Abmessungen des Kondensators abhängig und können daher variieren. Insbesondere beträgt die untere Grenzfrequenz 10 kHz und die obere Grenzfrequenz 100 kHz.

Vorzugsweise beträgt der zweite Grenzwinkel 7°. Wenn die im Betriebsflüssigkeitsbehälter bevorratete wässrige Betriebsflüssigkeit einen teilweise festen und einen teilweise flüssigen Aggregatzustand aufweist, dann beträgt die Differenz des Phasenwinkels bei der oberen Grenzfrequenz, die beispielsweise 100 kHz aufweisen kann, und des Phasenwinkels bei der unteren Grenzfrequenz, die beispielsweise 10 kHz aufweisen kann, mehr als 7°.

Vorzugsweise werden mehr als lediglich nur zwei Wechselspannungen an den zumindest einen Kondensator angelegt. Die Vielzahl von an den zumindest einen Kondensator anzulegenden Wechselspannungen weisen jeweils unterschiedliche Frequenzen in einem Frequenzbereich zwischen der unteren Grenzfrequenz und der oberen Grenzfrequenz auf.

Die Frequenzabstände der jeweiligen zueinander benachbarten Wechselspannungen sind vorzugsweise variabel und hängen von der Geometrie und den Abmessungen des Kondensators und von der zu erreichenden Messauflösung ab. Insbesondere Beträgt der Frequenzabstand zwischen den Frequenzen der unterschiedlichen Wechselspannungen 1 kHz.

Vorzugsweise weist das Verfahren folgenden Verfahrensschritt auf:

I) Bestimmen, dass die im Betriebsflüssigkeitsbehälter befindliche Betriebsflüssigkeit einen flüssigen Aggregatzustand aufweist, wenn der erste Phasenwinkel kleiner als der erste Grenzwinkel und eine Differenz zwischen dem zweiten Phasenwinkel und dem ersten Phasenwinkel kleiner als der zweite Grenzwinkel ist.

Vorzugsweise wird im Verfahrensschritt I oder dem Verfahrensschritt I nachfolgend ein Freigabesignal ausgegeben. Das Freigabesignal wird folglich dann ausgegeben, wenn die im Betriebsflüssigkeitsbehälter bevorratete Betriebsflüssigkeit im flüssigen Aggregatzustand vorliegt.

Durch Ausgabe eines Freigabesignals kann insbesondere einer Steuerungseinrichtung des Kraftfahrzeugs signalisiert werden, dass die im Betriebsflüssigkeitsbehälterinnenraum befindliche Betriebsflüssigkeit im flüssigen Aggregatzustand vorliegt, so dass ein Betrieb des Kraftfahrzeugs ermöglicht ist.

Vorzugsweise weist das Verfahren folgende Verfahrensschritte auf:

C') Bestimmen einer ersten Kapazität des Kondensators aus der ersten Impedanz;
G') Bestimmen einer zweiten Kapazität des Kondensators aus der zweiten Impedanz
L) Ermitteln einer relativen Abweichung der zweiten Kapazität von der ersten Kapazität; und
D) Bestimmen, dass die im Betriebsflüssigkeitsbehälter befindliche Betriebsflüssigkeit einen festen Aggregatzustand aufweist, wenn die relative Abweichung der zweiten Kapazität von der ersten Kapazität größer als eine erste Kapazitätsabweichung ist.

Das entsprechend ausgebildete Verfahren weist eine nochmals erhöhte Genauigkeit und somit Zuverlässigkeit auf, eine Eisbildung der im Betriebsflüssigkeitsbehälter bevorrateten Betriebsflüssigkeit zu detektieren. Damit ist die Betriebssicherheit eines Kraftfahrzeugs erhöht, in welchem ein Betriebsflüssigkeitsbehälter verbaut ist, der das entsprechende Verfahren ausführt.

Die Anmelderin hat festgestellt, dass die Kapazität des Kondensators zwischen einer unteren Grenzfrequenz und einer oberen Grenzfrequenz für eine wässrige Betriebsflüssigkeit im festen Aggregatzustand stärker abfällt als für eine wässrige Betriebsflüssigkeit im flüssigen Aggregatzustand. Dabei hängen die untere Grenzfrequenz und die obere Grenzfrequenz der an den Kondensator angelegten Wechselspannung von der Geometrie des Kondensators und der Größe der Elektroden des Kondensators und dem Abstand der Elektroden des Kondensators voneinander und der zu erreichenden Messauflösung ab.

Die Anmelderin hat festgestellt, dass die frequenzabhängige Kapazität des Kondensators für eine wässrige Betriebsflüssigkeit innerhalb des Betriebsflüssigkeitsbehälters in einem Frequenzbereich zwischen 10 kHz und 100 kHz um zumindest 20% abfällt, wenn die wässrige Betriebsflüssigkeit einen festen Aggregatzustand aufweist. Somit beträgt die erste Kapazitätsabweichung 20%.

Der Frequenzbereich kann sich jedoch in Abhängigkeit der Größe und der Geometrie des Kondensators verändern.

Vorzugsweise weist das Verfahren folgenden Verfahrensschritt auf:

H) Bestimmen, dass die im Betriebsflüssigkeitsbehälter befindliche Betriebsflüssigkeit teilweise einen festen und teilweise einen flüssigen Aggregatzustand aufweist, wenn die relative Abweichung der zweiten Kapazität von der ersten Kapazität kleiner als die erste Kapazitätsabweichung und größer als eine zweite Kapazitätsabweichung ist.

Das entsprechend ausgebildete Verfahren weist eine nochmals erhöhte Genauigkeit und somit Zuverlässigkeit auf, eine Eisbildung der im Betriebsflüssigkeitsbehälter bevorrateten Betriebsflüssigkeit zu detektieren. Damit ist die Betriebssicherheit eines Kraftfahrzeugs erhöht, in welchem ein Betriebsflüssigkeitsbehälter verbaut ist, der das entsprechende Verfahren ausführt.

Die Anmelderin hat festgestellt, dass die frequenzabhängige Kapazität des Kondensators für eine wässrige Betriebsflüssigkeit innerhalb des Betriebsflüssigkeitsbehälters in einem Frequenzbereich zwischen 10 kHz und 100 kHz um weniger als 20% und mehr als 5% abfällt, wenn die wässrige Betriebsflüssigkeit einen teilweise festen und einen teilweise flüssigen Aggregatzustand aufweist. Somit beträgt die erste Kapazitätsabweichung 20%, und die zweite Kapazitätsabweichung beträgt 5%.

Vorzugsweise weist das Verfahren folgenden Verfahrensschritt auf:

I) Bestimmen, dass die im Betriebsflüssigkeitsbehälter befindliche Betriebsflüssigkeit einen flüssigen Aggregatzustand aufweist, wenn die relative Abweichung der zweiten Kapazität von der ersten Kapazität kleiner als eine zweite Kapazitätsabweichung ist.

Das entsprechend ausgebildete Verfahren weist eine nochmals erhöhte Genauigkeit und somit Zuverlässigkeit auf, einen flüssigen Aggregatzustand der im Betriebsflüssigkeitsbehälter bevorrateten Betriebsflüssigkeit zu bestimmen. Damit ist die Betriebssicherheit eines Kraftfahrzeugs erhöht, in welchem ein Betriebsflüssigkeitsbehälter verbaut ist, der das entsprechende Verfahren ausführt.

Die der vorliegenden Erfindung zugrundeliegende Aufgabe wird ferner durch ein Verfahren gemäß Anspruch 6 der vorliegenden Erfindung gelöst. Vorteilhafte Ausgestaltungen des Verfahrens sind in dem von Anspruch 6 abhängigen Anspruch 7 beschrieben.

Im Genaueren wird die der vorliegenden Erfindung zugrundeliegende Aufgabe durch ein Verfahren zum Bestimmen eines Aggregatzustandes einer Betriebsflüssigkeit in einem Betriebsflüssigkeitsbehälter für ein Kraftfahrzeug gemäß Anspruch 6 gelöst, wobei der Betriebsflüssigkeitsbehälter zumindest einen an einer Behälterwand des Betriebsflüssigkeitsbehälters befestigten Kondensator mit einer ersten Elektrode und einer dieser gegenüberliegenden zweiten Elektrode aufweist. Das erfindungsgemäße Verfahren weist die folgenden

Verfahrensschritte J, K, L, M und N auf:

J) Anlegen von zumindest zwei unterschiedlichen Wechselspannungen an den Kondensator, wobei eine erste Frequenz einer ersten Wechselspannung einer unteren Grenzfrequenz und eine zweite Frequenz einer zweiten Wechselspannung einer oberen Grenzfrequenz entspricht;

K) Bestimmen und Speichern einer ersten Kapazität des Kondensators für die erste Frequenz und einer zweiten Kapazität des Kondensators für die zweite Frequenz;

L) Ermitteln einer relativen Abweichung der zweiten Kapazität von der ersten Kapazität; und

M) Bestimmen, dass die im Betriebsflüssigkeitsbehälter befindliche Betriebsflüssigkeit einen festen Aggregatzustand aufweist, wenn die relative Abweichung der zweiten Kapazität von der ersten Kapazität größer als eine erste Kapazitätsabweichung ist;

N) Bestimmen, dass die im Betriebsflüssigkeitsbehälter befindliche Betriebsflüssigkeit teilweise einen festen und teilweise einen flüssigen Aggregatzustand aufweist, wenn die relative Abweichung der zweiten Kapazität von der ersten Kapazität kleiner als die erste Kapazitätsabweichung und größer als eine zweite Kapazitätsabweichung ist.

Das erfindungsgemäße Verfahren weist den Vorteil auf, dass eine Bestimmung bzw. Ermittlung, ob die im Betriebsflüssigkeitsbehälter bevorratete Betriebsflüssigkeit einen festen Aggregatzustand aufweist und somit als Eis vorliegt, zuverlässig ohne direkten Kontakt einer Messeinrichtung, im vorliegenden Fall des Kondensators, mit der Betriebsflüssigkeit ermöglicht ist. Die Kapazität des zumindest einen Kondensators korreliert mit dem Aggregatzustand der im Betriebsflüssigkeitsbehälter bevorrateten Betriebsflüssigkeit. Somit kann durch Bestimmen der frequenzabhängigen Kapazität des Kondensators auf den Aggregatzustand der im Betriebsflüssigkeitsbehälterinnenraum befindlichen Betriebsflüssigkeit rückgeschlossen werden.

Der Aggregatzustand der im Betriebsflüssigkeitsbehälter bevorrateten Betriebsflüssigkeit korreliert mit der Kapazität des Kondensators, die wiederum von dem Medium abhängt, den das elektrische Wechselfeld zwischen der ersten Elektrode und der zweiten Elektrode des Kondensators durchdringt. Somit kann durch Bestimmen der frequenzabhängigen Kapazität des Kondensators auf den Aggregatzustand der Betriebsflüssigkeit rückgeschlossen werden.

Die frequenzabhängige Kapazität des Kondensators hängt von der elektrischen Leitfähigkeit des Mediums ab, das von dem elektrischen Wechselfeld zwischen der ersten Elektrode und der zweiten Elektrode des Kondensators durchdrungen wird. Somit hängt die frequenzabhängige Kapazität des Kondensators von dem Material der Behälterwand und von dem Aggregatzustand der im Betriebsflüssigkeitsbehälterinnenraum befindlichen Betriebsflüssigkeit ab.

Die Anmelderin hat herausgefunden, dass der Verlauf der Kapazität des Kondensators über die Frequenz der angelegten Wechselspannung eindeutige Rückschlüsse auf den Aggregatzustand der Betriebsflüssigkeit ermöglicht. So hat die Anmelderin festgestellt, dass der Verlauf der Kapazität des Kondensators zwischen einer unteren Grenzfrequenz und einer oberen Grenzfrequenz eine gewisse Abweichung, beispielsweise einen gewissen Abfall aufweisen muss, wenn die Betriebsflüssigkeit einen festen Aggregatzustand aufweist. Dabei hängen die untere Grenzfrequenz und die obere Grenzfrequenz der an den Kondensator angelegten Wechselspannung von der Geometrie des Kondensators und der Größe der Elektroden des Kondensators und dem Abstand der Elektroden des Kondensators voneinander ab.

Die Anmelderin hat festgestellt, dass die Kapazität des Kondensators für eine innerhalb des Betriebsflüssigkeitsbehälters bevorratete wässrige Betriebsflüssigkeit mit einer elektrischen Leitfähigkeit von etwa 130 $\mu$S/cm in einem Frequenzbereich zwischen 10 kHz bis 100 kHz um zumindest 20% abweicht. Somit beträgt die Differenz zwischen der Kapazität des Kondensators bei einer Frequenz von 100 kHz und der Kapazität des Kondensators bei einer Frequenz von 10 kHz zumindest 20%. Der Frequenzbereich kann sich jedoch in Abhängigkeit der Größe und der Geometrie des Kondensators verändern.

Der Betriebsflüssigkeitsbehälter ist vorzugsweise ein Betriebsflüssigkeitsbehälter für ein Kraftfahrzeug. Weiter vorzugsweise ist der Betriebsflüssigkeitsbehälter als Wasserbehälter für ein Kraftfahrzeug zur Aufnahme von Wasser ausgebildet, das zur Injektion in eine Brennkraftmaschine des Kraftfahrzeugs vorgesehen ist. Weiter vorzugsweise ist der Betriebsflüssigkeitsbehälter als Harnstoffbehälter zur Aufnahme einer wässrigen Harnstofflösung ausgebildet, die zur Injektion in den Abgasstrang einer Verbrennungskraftmaschine vorgesehen ist.

Bei dem Verfahrensschritt L des Ermittelns der relativen Abweichung der zweiten Kapazität von der ersten Kapazität wird folgende Berechnung durchgeführt:

$$\texttt{delta = |Cfmin - Cfmax| / Cfmin}$$

Dabei ist:

- fmin die untere Grenzfrequenz
- fmax die obere Grenzfrequenz
- Cfmin die erste Kapazität des Kondensators bei einer die untere Grenzfrequenz fmin aufweisenden Wechselspannung
- Cfmax die zweite Kapazität des Kondensators bei einer die obere Grenzfrequenz fmax aufweisenden Wechselspannung
- delta die relative Abweichung der zweiten Kapazität Cfmax von der ersten Kapazität Cfmin

Die erste Mindestabweichung beträgt vorzugsweise mehr als 0,2. Für beispielsweise Leitungswasser und einer unteren Grenzfrequenz von 10 kHz und einer oberen Grenzfrequenz von 100 kHz beträgt die Mindestabweichung beispielsweise etwa 0,2, wenn die Elektroden des Kondensators eine Längenerstreckung von 100 mm, eine Breitenerstreckung von 50 mm und einen Abstand der ersten Elektrode zur zweiten Elektrode von 10 mm aufweisen. Vorzugsweise wird ein Stoppsignal ausgegeben, wenn die relative Abweichung der zweiten Kapazität von der ersten Kapazität größer als eine erste Kapazitätsabweichung ist. Durch Ausgabe des Stoppsignals kann ein Betrieb des Kraftfahrzeugs verhindert werden.

Das entsprechend ausgebildete Verfahren weist den Vorteil auf, dass eine Bestimmung bzw. Ermittlung, ob die im Betriebsflüssigkeitsbehälter bevorratete Betriebsflüssigkeit einen teilweise festen und einen teilweise flüssigen Aggregatzustand aufweist, zuverlässig ohne direkten Kontakt des Kondensators mit der Betriebsflüssigkeit ermöglicht ist. Ein Zustand, in dem die im Betriebsflüssigkeitsbehälter bevorratete wässrige Betriebsflüssigkeit teilweise in flüssiger und teilweise in gefrorener Form vorliegt, ist insbesondere bei Temperaturen im Bereich des Gefrierpunktes der Betriebsflüssigkeit gegeben.

Vorzugsweise wird im Verfahrensschritt N oder dem Verfahrensschritt N nachfolgend ein Warnsignal ausgegeben. Das Warnsignal wird folglich dann ausgegeben, wenn die im Betriebsflüssigkeitsbehälter bevorratete Betriebsflüssigkeit teilweise im festen und teilweise im flüssigen Aggregatzustand vorliegt.

Durch Ausgabe eines Warnsignals kann ein Benutzer des Kraftfahrzeugs, in dem der Betriebsflüssigkeitsbehälter verbaut ist, darauf hingewiesen werden kann, dass die im Betriebsflüssigkeitsbehälterinnenraum befindliche Betriebsflüssigkeit zumindest teilweise gefroren ist und teilweise als Eis vorliegt. Durch Ausgabe des Warnsignals kann insbesondere die Aktivierung einer Heizeinrichtung zum Aufheizen der im Betriebsflüssigkeitsbehälter bevorrateten Betriebsflüssigkeit erfolgen.

Vorzugsweise weist das Verfahren folgenden Verfahrensschritt auf:

O) Bestimmen, dass die im Betriebsflüssigkeitsbehälter befindliche Betriebsflüssigkeit einen flüssigen Aggregatzustand aufweist, wenn die relative Abweichung der zweiten Kapazität von der ersten Kapazität kleiner als eine zweite Kapazitätsabweichung ist.

Vorzugsweise wird im Verfahrensschritt O oder dem Verfahrensschritt O nachfolgend ein Freigabesignal ausgegeben. Das Freigabesignal wird folglich dann ausgegeben, wenn die im Betriebsflüssigkeitsbehälter bevorratete Betriebsflüssigkeit im flüssigen Aggregatzustand vorliegt.

Durch Ausgabe eines Freigabesignals kann insbesondere einer Steuerungseinrichtung des Kraftfahrzeugs signalisiert werden, dass die im Betriebsflüssigkeitsbehälterinnenraum befindliche Betriebsflüssigkeit im flüssigen Aggregatzustand vorliegt, so dass ein Betrieb des Kraftfahrzeugs ermöglicht ist.

Ferner liegt der vorliegenden Erfindung die Aufgabe zugrunde, einen Betriebsflüssigkeitsbehälter bereitzustellen, der zum Bestimmen eines Aggregatszustandes einer in diesem befindlichen Betriebsflüssigkeit ausgebildet ist.

Diese Aufgabe wird durch einen Betriebsflüssigkeitsbehälter mit den Merkmalen des Anspruchs 8 gelöst. Vorteilhafte Ausgestaltungen des Betriebsflüssigkeitsbehälters sind in den von Anspruch 8 abhängigen Ansprüchen 9 bis 13 beschrieben.

Im Genaueren wird die der vorliegenden Erfindung zugrundeliegende Aufgabe durch einen Betriebsflüssigkeitsbehälter gemäß Anspruch 8 gelöst, dessen Betriebsflüssigkeitsbehälterinnenraum von einer Deckenwand, einer Bodenwand und einer die Bodenwand mit der Deckenwand verbindenden Seitenwand begrenzt ist. Der Betriebsflüssigkeitsbehälter weist zumindest einen an einer Behälterwand des Betriebsflüssigkeitsbehälters befestigten Kondensator mit einer ersten Elektrode und einer zweiten Elektrode auf. Ferner weist der Betriebsflüssigkeitsbehälter eine elektronische Auswerteeinrichtung auf, die mit der ersten Elektrode und mit der zweiten Elektrode elektrisch verbunden ist. Der erfindungsgemäße Betriebsflüssigkeitsbehälter ist dadurch gekennzeichnet, dass die Auswerteeinrichtung dazu ausgebildet ist, zumindest eines der oben beschriebenen Verfahren auszuführen.

Der zumindest eine Kondensator ist vorzugsweise an oder in einer Seitenwand des Betriebsflüssigkeitsbehälters angebracht. Weiter vorzugsweise ist der zumindest eine Kondensator derart an der Seitenwand oder in der Seitenwand angeordnet, dass die erste Elektrode und die zweite Elektrode, die jeweils eine Längserstreckung, eine Breitenerstreckung und eine Tiefenerstreckung aufweisen, jeweils derart parallel zur Seitenwand verlaufen, dass die Längserstreckungen der ersten Elektrode und der zweiten Elektrode von der Bodenwand in Richtung der Deckenwand verlaufen.

Gemäß einer weiteren Ausgestaltung des Betriebsflüssigkeitsbehälters ist der zumindest eine Kondensator an der Bodenwand oder in der Bodenwand angeordnet, so dass die erste Elektrode und die zweite Elektrode jeweils parallel zur Bodenwand verlaufen.

Der zumindest eine Kondensator kann an einer Außenseite der Behälterwand angeordnet und mit dieser verbunden sein. Ferner ist es auch möglich, dass der zumindest eine Kondensator in der Behälterwand integriert bzw. eingebettet ist. Dabei sind die jeweiligen ersten und zweiten Elektroden des Kondensators von der Behälterwand umschlossen.

Der Betriebsflüssigkeitsbehälter ist vorzugsweise derart ausgebildet, dass der zumindest eine Kondensator in der Behälterwand eingebettet ist.

Bei einer Einbettung der Elektroden des Kondensators in die Behälterwand sind die Elektroden von der Behälterwand umschlossen, so dass lediglich noch elektrische Anschlüsse der Elektroden aus der Behälterwand herausragen.

Der entsprechend ausgebildete Betriebsflüssigkeitsbehälter weist den Vorteil auf, dass aufgrund der Einbettung des zumindest einen Kondensators in die Behälterwand des Betriebsflüssigkeitsbehälters die erste Elektrode und die zweite Elektrode des zumindest einen Kondensators einen verminderten Abstand zum Betriebsflüssigkeitsbehälterinnenraum und somit zu der im Betriebsflüssigkeitsbehälterinnenraum befindlichen Betriebsflüssigkeit aufweisen. Daher wechselwirkt ein zwischen der ersten Elektrode und der zweiten Elektrode des Kondensators befindliches elektrisches Feld weniger mit dem Material der Behälterwand und mehr mit der im Betriebsflüssigkeitsbehälterinnenraum befindlichen Betriebsflüssigkeit. Somit lässt sich der Aggregatzustand der Betriebsflüssigkeit im Betriebsflüssigkeitsbehälterinnenraum mit einer erhöhten Genauigkeit bestimmen.

Ein weiterer Vorteil der Einbettung des zumindest einen Kondensators in die Behälterwand ist, dass der zumindest eine Kondensator mechanisch und chemisch geschützt ist, so dass der erfindungsgemäße Betriebsflüssigkeitsbehälter eine erhöhte Langzeitstabilität aufweist.

Der Betriebsflüssigkeitsbehälter ist insbesondere als Betriebsflüssigkeitsbehälter für ein Kraftfahrzeug ausgebildet.

Vorzugsweise ist der Betriebsflüssigkeitsbehälter derart ausgebildet, dass die Bodenwand eine sich in den Betriebsflüssigkeitsbehälterinnenraum erstreckende Erhebung aufweist, wobei die erste Elektrode und die zweite Elektrode des Kondensators in der Erhebung eingebettet sind.

Durch eine entsprechende Ausbildung des Betriebsflüssigkeitsbehälters ist die Bestimmung des Aggregatzustandes der Betriebsflüssigkeit mit einer nochmals erhöhten Genauigkeit ermöglicht, da eventuelle Ablagerungen im Bereich der Bodenwand einen verminderten Einfluss auf die Bestimmung des Aggregatzustandes der sich im Betriebsflüssigkeitsbehälterinnenraum befindlichen Betriebsflüssigkeit haben.

Die Erhebung der Bodenwand ist vorzugsweise als Einstülpung in den Betriebsflüssigkeitsbehälterinnenraum ausgebildet.

Die Erhebung ist vorzugsweise zwischen 2mm und 5mm von der umgebenden Innenfläche der Bodenwand abgehoben.

Vorzugsweise ist der Betriebsflüssigkeitsbehälter derart ausgebildet, dass die Behälterwand eine Außenschicht, eine dem Betriebsflüssigkeitsbehälterinnenraum zugewandte Innenschicht und eine zwischen diese angeordnete Haftschicht aufweist, wobei die erste Elektrode und die zweite Elektrode des zumindest einen Kondensators zwischen der Außenschicht und der Haftschicht angeordnet sind.

Folglich ist der zumindest eine Kondensator zwischen der Außenschicht und der Haftschicht angeordnet. Die Innenschicht ist folglich mit der Betriebsflüssigkeit in direkten Kontakt bringbar.

Eine entsprechende Ausbildung des Betriebsflüssigkeitsbehälters ermöglicht einen vereinfachten Aufbau und eine vereinfachte Integration des Kondensators in die Behälterwand des Betriebsflüssigkeitsbehälters.

Vorzugsweise ist der Betriebsflüssigkeitsbehälter derart ausgebildet, dass die Behälterwand eine Abschirmschicht und eine Isolationsschicht aufweist, wobei die Abschirmschicht zwischen der Außenschicht und der ersten und zweiten Elektroden angeordnet ist, und wobei die Isolationsschicht zwischen der Abschirmschicht und den ersten und zweiten Elektroden angeordnet ist.

Der entsprechend ausgebildete Betriebsflüssigkeitsbehälter weist den Vorteil auf, dass dieser eine nochmals erhöhte Genauigkeit hinsichtlich der Bestimmung des Aggregatszustandes der im Betriebsflüssigkeitsbehälterinnenraum befindlichen Betriebsflüssigkeit aufweist. Denn die Abschirmschicht, die vorzugsweise als eine Metallschicht ausgebildet ist, schirmt die Elektroden des zumindest einen Kondensators vor Störfeldern ab.

Die Abschirmschicht ist folglich zwischen der Außenschicht und dem Referenzkondensator bzw. dem Kondensator angeordnet.

Die Abschirmschicht steht vorzugsweise mit der Außenschicht in Kontakt.

Die Isolationsschicht ist folglich sandwichartig zwischen der Abschirmschicht und dem Kondensator angeordnet.

Die Abschirmschicht weist ein Metall auf, so dass der zumindest eine Kondensator vor elektrische Störfeldern geschützt ist.

Die Isolationsschicht ist aus einem dielektrischen Material, vorzugsweise einem Kunststoff gefertigt, so dass die ersten und zweiten Elektroden des zumindest einen Kondensators nicht mit der Abschirmschicht in elektrischem Kontakt stehen.

Vorzugsweise ist der Betriebsflüssigkeitsbehälter derart ausgebildet, dass die Isolationsschicht die gleiche dielektrische Leitfähigkeit wie die Innenschicht und/oder die Außenschicht aufweist.

Der entsprechend ausgebildete Betriebsflüssigkeitsbehälter weist den Vorteil auf, dass dieser eine nochmals erhöhte Genauigkeit hinsichtlich der Bestimmung des Aggregatzustandes der im Betriebsflüssigkeitsbehälterinnenraum befindlichen Betriebsflüssigkeit aufweist.

Vorzugsweise ist der Betriebsflüssigkeitsbehälter derart ausgebildet, dass ein Abstand der ersten und zweiten Elektroden zu dem Betriebsflüssigkeitsbehälterinnenraum zwischen 1,5 mm und 3,5 mm beträgt.

Der entsprechend ausgebildete Betriebsflüssigkeitsbehälter weist den Vorteil auf, dass dieser eine nochmals erhöhte Genauigkeit hinsichtlich der Bestimmung des Aggregatzustandes der im Betriebsflüssigkeitsbehälterinnenraum befindlichen Betriebsflüssigkeit aufweist, denn der Abstand der entsprechenden Elektroden zu der sich im Betriebsflüssigkeitsbehälterinnenraum befindlichen Betriebsflüssigkeit ist reduziert.

Vorzugsweise weist die Innenschicht folglich eine Dicke von 1,5 mm bis 3,5 mm auf.

Folglich weist der zumindest eine Kondensator zum Betriebsflüssigkeitsbehälterinnenraum einen Abstand von lediglich 1,5 mm bis 3,5 mm auf.

Vorzugsweise ist der Betriebsflüssigkeitsbehälter derart ausgebildet, dass zumindest eine der ersten und zweiten Elektroden des Kondensators entlang ihrer Längserstreckung eine ungleichmäßige Breitenerstreckung aufweist.

Umso breiter die Elektroden sind, desto tiefer dringt das elektrische Feld in den Betriebsflüssigkeitsbehälterinnenraum und in die sich in diesem befindliche Betriebsflüssigkeit ein, so dass die Betriebsflüssigkeit einen größeren Einfluss auf die Bestimmung des Aggregatzustandes der Betriebsflüssigkeit hat.

Vorzugsweise ist der Betriebsflüssigkeitsbehälter derart ausgebildet, dass zumindest einer der ersten und zweiten Elektroden des Kondensators entlang ihrer Längserstreckung eine sich in Richtung der Bodenwand vergrößernde Breitenerstreckung aufweist. Der entsprechend ausgebildete Betriebsflüssigkeitsbehälter weist den Vorteil auf, dass die Messgenauigkeit des Aggregatzustandes mittels des Kondensators im Bodenbereich des Betriebsflüssigkeitsbehälters erhöht ist.

Weitere Vorteile, Einzelheiten und Merkmale der Erfindung ergeben sich nachfolgend aus den erläuterten Ausführungsbeispielen. Dabei zeigen im Einzelnen:

| | |
|---|---|
| Figur 1: | ein Flussablaufdiagramm eines Verfahrens zum Bestimmen eines Aggregatzustandes einer wässrigen Betriebsflüssigkeit gemäß einer ersten Ausführungsform der vorliegenden Erfindung; |
| Figur 2: | frequenzabhängige Phasenverläufe der Impedanz eines Kondensators für eine wässrige Betriebsflüssigkeit mit drei unterschiedlichen Temperaturen; |
| Figur 3: | ein Flussablaufdiagramm eines Verfahrens zum Bestimmen eines Aggregatzustandes einer wässrigen Betriebsflüssigkeit gemäß einer zweiten Ausführungsform der vorliegenden Erfindung; |
| Figur 4: | frequenzabhängige Kapazitätsverläufe eines Kondensators für eine wässrige Betriebsflüssigkeit mit drei unterschiedlichen Temperaturen; |
| Figur 5: | ein Flussablaufdiagramm eines Verfahrens zum Bestimmen eines Aggregatzustandes einer wässrigen Betriebsflüssigkeit gemäß einer dritten Ausführungsform der vorliegenden Erfindung; |
| Figur 6: | eine stark vereinfachte räumliche Darstellung eines erfindungsgemäßen Betriebsflüssigkeitsbehälters; |
| Figur 7: | eine stark vereinfachte Darstellung einer Schichtstruktur der Bodenwand und/oder der Seitenwand des Betriebsflüssigkeitsbehälters gemäß einer weiteren Ausführungsform der vorliegenden Erfindung; und |
| Figuren 8A bis 8C: | Beispiele von Kondensatoren in Alleinstellung in seitlicher Draufsicht von Betriebsflüssigkeitsbehältern unterschiedlicher Ausführungsformen der vorliegenden Erfindung. |

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

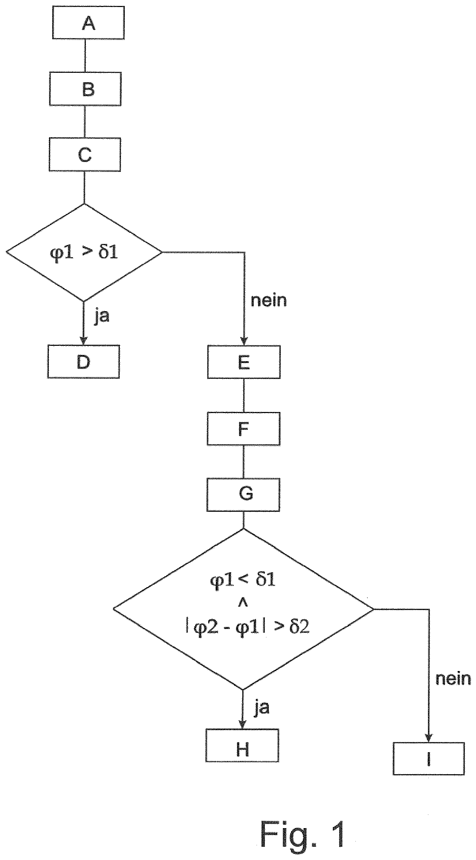

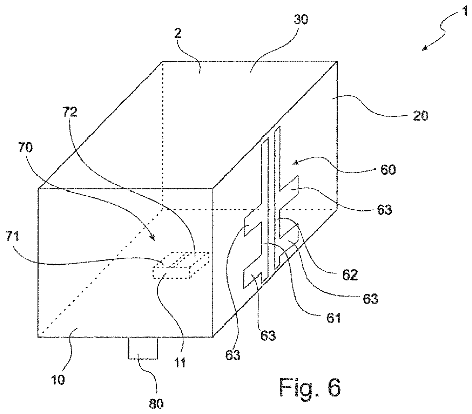

Figur 1 zeigt ein Flussablaufdiagramm eines Verfahrens zum Bestimmen eines Aggregatzustandes einer wässrigen Betriebsflüssigkeit in einem Betriebsflüssigkeitsbehälter 1 gemäß einer ersten Ausführungsform der vorliegenden Erfindung. Das Verfahren gemäß des in Figur 1 dargestellten Flussablaufdiagramms wird von einem in Figur 6 dargestellten Betriebsflüssigkeitsbehälter 1 ausgeführt.

Figur 6 zeigt eine stark vereinfachte räumliche Darstellung eines erfindungsgemäßen Betriebsflüssigkeitsbehälters 1. Ein Betriebsflüssigkeitsbehälterinnenraum 2 ist durch eine Deckenwand 30, eine Bodenwand 10 und eine die Bodenwand 10 mit der Deckenwand 30 verbindende Seitenwand 20 begrenzt. Aus Figur 6 ist ersichtlich, dass die Seitenwand 20 umlaufend ausgebildet ist.

Der in Figur 6 dargestellte Betriebsflüssigkeitsbehälter 1 weist einen ersten Kondensator 60 und einen zweiten Kondensator 70 auf. Gemäß der vorliegenden Erfindung kann der Betriebsflüssigkeitsbehälter 1 jedoch auch lediglich den ersten Kondensator 60 oder lediglich den zweiten Kondensator 70 aufweisen. Ferner kann der Betriebsflüssigkeitsbehälter 1 auch weitere Kondensatoren aufweisen, die in Figur 6 nicht dargestellt sind.

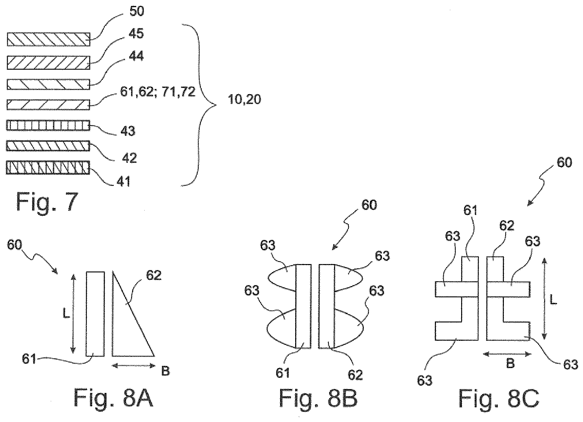

Der erste Kondensator 60 weist eine erste Elektrode 61 und eine zweite Elektrode 62 auf. Sowohl die erste Elektrode 61 als auch die zweite Elektrode 62 weisen jeweils eine Längserstreckung L, eine Breitenerstreckung B und eine Tiefenerstreckung auf (siehe Figuren 8A bis 8C). Die erste Elektrode 61 und die zweite Elektrode 62 sind dabei jeweils derart parallel zur Seitenwand 20 verlaufend angeordnet, dass die Längserstreckungen L der ersten Elektrode 61 und der zweiten Elektrode 62 von der Bodenwand 10 in Richtung der Deckenwand 30 verlaufen. Dabei sind Tiefenerstreckungen der ersten Elektrode 61 und der zweiten Elektrode 62 einander gegenüberliegend angeordnet.

Der erste Kondensator 60 ist in die Seitenwand 20 eingebettet, so dass die erste Elektrode 61 und die zweite Elektrode 62 des ersten Kondensators 60 in der Seitenwand 20 eingebettet sind. Daher ist der erste Kondensator 60 von der Seitenwand 20 umschlossen. Folglich stehen die erste Elektrode 61 und die zweite Elektrode 62 des ersten Kondensators 60 nicht mit einer Betriebsflüssigkeit 50 (siehe Figur 7) in direktem Kontakt. Ferner stehen die erste Elektrode 61 und die zweite Elektrode 62 des ersten Kondensators 60 auch nicht mit der Umgebung des Betriebsflüssigkeitsbehälters 1 in direktem Kontakt. Hinsichtlich der Einbettung des ersten Kondensators 60 in die Seitenwand 20 wird auf Figur 6 verwiesen, die weiter unten beschrieben wird.

Die vorliegende Erfindung ist jedoch nicht darauf beschränkt, dass der erste Kondensator 60 in der Seitenwand 20 eingebettet ist. Bei einem erfindungsgemäßen Betriebsflüssigkeitsbehälter 1 kann der erste Kondensator 60 auch auf einer Außenfläche der Seitenwand 20 befestigt sein.

Aus Figur 6 ist ersichtlich, dass die erste Elektrode 61 und die zweite Elektrode 62 des ersten Kondensators 60 jeweils zwei Flügel 63 aufweisen, die parallel zur Breitenerstreckung B der Elektroden 61, 62 verlaufen. Die jeweiligen Flügel 63 sind dabei in unterschiedlichen Höhen der ersten und zweiten Elektroden 61, 62 ausgebildet, sodass die Flügel 63 in unterschiedlichen Höhen des Betriebsflüssigkeitsbehälters 1 angeordnet sind. Somit weisen die ersten und zweiten Elektroden 61, 62 des ersten Kondensators 60 entlang ihrer Längserstreckung L eine ungleichmäßige Breitenerstreckung B auf. Die vorliegende Erfindung ist jedoch nicht auf eine entsprechende Ausgestaltung der ersten und zweiten Elektroden 61, 62 des ersten Kondensators 60 beschränkt. Beispielsweise können die ersten und zweiten Elektroden 61, 62 des ersten Kondensators 60 über ihrer Längserstreckungen L auch eine gleichmäßige Breitenerstreckung B aufweisen.

Der zweite Kondensator 70 weist eine erste Elektrode 71 und eine zweite Elektrode 72 auf. Die erste Elektrode 71 und die zweite Elektrode 72 verlaufen parallel zur Bodenwand 10. Die erste Elektrode 71 und die zweite Elektrode 72 sind dabei jeweils derart parallel zur Bodenwand 10 verlaufend angeordnet, dass die Längserstreckungen und die Breitenersteckungen der ersten Elektrode 71 und der zweiten Elektrode 72 in der Ebene der Bodenwand 10 verlaufen, so dass die Tiefenerstreckungen der ersten Elektrode 71 und der zweiten Elektrode 72 einander gegenüberliegend angeordnet sind.

Wie aus Figur 6 ersichtlich ist, weist die Bodenwand 10 eine sich in den Betriebsflüssigkeitsbehälterinnenraum 2 erstreckende Erhebung 11 auf. Der zweite Kondensator 70 ist in der Bodenwand 10 derart eingebettet, dass die erste Elektrode 71 und die zweite Elektrode 72 des zweiten Kondensators 70 in der Erhebung 11 der Bodenwand 10 eingebettet sind. Folglich stehen die erste Elektrode 71 und die zweite Elektrode 72 des zweiten Kondensators 70 nicht mit der Betriebsflüssigkeit 50 in direktem Kontakt. Ferner stehen die erste Elektrode 71 und die zweite Elektrode 72 des zweite Kondensators 70 auch nicht mit der Umgebung des Betriebsflüssigkeitsbehälters 1 in direktem Kontakt. Durch die Einbettung der ersten Elektrode 71 und der zweiten Elektrode 72 in der Erhebung 11 der Bodenwand 10 wirken sich eventuelle Ablagerungen auf der Bodenwand 10 vermindert auf die Bestimmung des Aggregatzustandes der sich im Betriebsflüssigkeitsbehälterinnenraum 2 befindlichen Betriebsflüssigkeit 50 aus.

Hinsichtlich der Einbettung des zweiten Kondensators 70 in die Bodenwand 10 bzw. in die Erhebung 11 der Bodenwand 10 wird auf Figur 7 verwiesen, die weiter unten beschrieben wird.

Die vorliegende Erfindung ist jedoch nicht darauf beschränkt, dass der zweite Kondensator 70 in der Bodenwand 10 eingebettet ist. Bei einem erfindungsgemäßen Betriebsflüssigkeitsbehälter 1 kann der zweite Kondensator 70 auch auf einer Außenfläche der Bodenwand 10 befestigt sein.

Der Betriebsflüssigkeitsbehälter 1 weist ferner eine elektronische Auswerteeinrichtung 80 auf, die mit dem ersten Kondensator 60 und dem zweiten Kondensator 70 elektrisch verbunden ist. Die elektrische Verbindung der Auswerteeinrichtung 80 mit dem ersten Kondensator 60 und dem zweiten Kondensator 70 erfolgt über in Figur 6 nicht dargestellte elektrische Leitungen.

Die Auswerteeinrichtung 80 ist dazu ausgebildet, das Verfahren gemäß dem in Figur 1 dargestellten Flussablaufdiagramm auszuführen, das im Folgenden beschrieben wird.

In einem Verfahrensschritt A wird zumindest eine erste Wechselspannung an den ersten Kondensator 60 und/oder an den zweiten Kondensator 70 angelegt. Dabei entspricht eine erste Frequenz der ersten Wechselspannung einer unteren Grenzfrequenz fmin, die im dargestellten Ausführungsbeispiel 10 kHz beträgt.

In einem Verfahrensschritte B wird eine erste Impedanz des ersten Kondensators 60 und/oder des zweiten Kondensators 70 für die erste Frequenz bestimmt und gespeichert.

Anschließend wird in einem Verfahrensschritt C ein erster Phasenwinkel $\varphi 1$ aus der ersten Impedanz bestimmt.

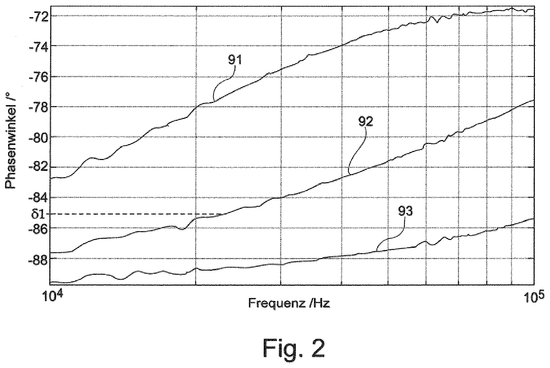

In Figur 2 sind drei unterschiedliche frequenzabhängige Phasenverläufe von Impedanzen des ersten Kondensators 60 und/oder des zweiten Kondensators 70 für eine wässrige Betriebsflüssigkeit 50 mit drei unterschiedlichen Temperaturen dargestellt. Dabei zeigt der Verlauf 91 einen Phasenverlauf der Impedanz für die wässrige Betriebsflüssigkeit, die eine Temperatur von -15°C aufweist. Der Verlauf 92 zeigt den frequenzabhängigen Verlauf des Phasenwinkels der Impedanz für die Betriebsflüssigkeit, die eine Temperatur von -2°C aufweist. Der Verlauf 93 zeigt den frequenzabhängigen Verlauf des Phasenwinkels der Impedanz für die Betriebsflüssigkeit, die eine Temperatur von +3°C aufweist.

Aus dem in Figur 2 dargestellten Verlauf 91 des Phasenwinkels der Impedanz des Kondensators 60, 70 für die eine Temperatur von -15°C aufweisende Betriebsflüssigkeit ist ersichtlich, dass der erste Phasenwinkel $\varphi 1$ bei einer unteren Grenzfrequenz fmin von 10 kHz größer als ein in Figur 2 eingezeichneter erster Grenzwinkel $\delta 1$ ist, wobei in

dem dargestellten Ausführungsbeispiel der erste Grenzwinkel $\delta 1$ -85° beträgt.

Zurückkommend zu dem Verfahren gemäß dem in Figur 1 dargestellten Flussablaufdiagramm wird nach dem Verfahrensschritt C überprüft, ob der erste Phasenwinkel $\varphi 1$ größer als der erste Grenzwinkel $\delta 1$ ist. Wenn diese Bedingung erfüllt ist, dann wird in einem Verfahrensschritt D bestimmt, dass die im Betriebsflüssigkeitsbehälter 1 befindliche Betriebsflüssigkeit 50 einen festen Aggregatzustand aufweist und folglich als Eis vorliegt. Aus dem in Figur 2 dargestellten Verlauf 91 des Phasenwinkels der Impedanz des Kondensators 60, 70 für die eine Temperatur von -15°C aufweisende Betriebsflüssigkeit beträgt der erste Phasenwinkel $\varphi 1$ in etwa -83°. Der erste Grenzwinkel $\delta 1$ beträgt hingegen -85°. Daher ist für die eine Temperatur von -15 °C aufweisende Betriebsflüssigkeit die Bedingung erfüllt, dass der erste Phasenwinkel $\varphi 1$ größer als der erste Grenzwinkel $\delta 1$ ist, sodass im Verfahrensschritt D bestimmt wird, dass die Betriebsflüssigkeit einen festen Aggregatzustand aufweist.

Wenn der erste Phasenwinkel $\varphi 1$ nicht größer als der erste Grenzwinkel $\delta 1$ ist, dann wird in einem Verfahrensschritt E eine zweite Wechselspannung an den ersten Kondensator 60 und/oder an den zweiten Kondensator 70 angelegt, wobei eine zweite Frequenz der zweiten Wechselspannung einer oberen Grenzfrequenz fmax entspricht. In dem dargestellten Ausführungsbeispiel beträgt die obere Grenzfrequenz 100 kHz. Anschließend wird in einem Verfahrensschritt F eine zweite Impedanz des ersten Kondensators 60 und/oder des zweiten Kondensators 70 für die zweite Frequenz bestimmt und gespeichert. Dem Verfahrensschritt F nachfolgend wird in einem Verfahrensschritt G ein zweiter Phasenwinkel $\varphi 2$ aus der zweiten Impedanz bestimmt.

Anschließend wird überprüft, ob ein Absolutwert einer Differenz zwischen dem zweiten Phasenwinkel $\varphi 2$ und dem ersten Phasenwinkel $\varphi 1$ größer als ein zweiter Grenzwinkel $\delta 2$ ist. Wenn diese Bedingung erfüllt ist, dann wird in einem Verfahrensschritt H bestimmt, dass die im Betriebsflüssigkeitsbehälter 1 befindliche Betriebsflüssigkeit 50 teilweise einen festen und teilweise einen flüssigen Aggregatzustand aufweist. Der Verfahrensschritt H wird folglich lediglich dann ausgeführt, wenn der ersten Phasenwinkel $\varphi 1$ kleiner als der erste Grenzwinkel $\delta 1$ und ein Absolutwert einer Differenz zwischen dem zweiten Phasenwinkel $\varphi 2$ und dem ersten Phasenwinkel $\varphi 1$ größer als der zweite Grenzwinkel $\delta 2$ ist.

Aus dem in Figur 2 dargestellten Verlauf 92 des Phasenwinkels der Impedanz des Kondensators 60, 70 für die eine Temperatur von -2°C aufweisende Betriebsflüssigkeit ist ersichtlich, dass der erste Phasenwinkel $\varphi 1$ bei der unteren Grenzfrequenz fmin von 10 kHz in etwa -87,5° und der zweite Phasenwinkel $\varphi 2$ bei der oberen Grenzfrequenz fmax von 100 kHz in etwa -77,5° beträgt. Der Absolutwert der Differenz zwischen dem zweiten Phasenwinkel $\varphi 2$ und dem ersten Phasenwinkel $\varphi 1$ beträgt somit 10°. In dem dargestellten Ausführungsbeispiel beträgt der zweite Grenzwinkel $\delta 2$ 7°. Da der erste Phasenwinkel $\varphi 1$ kleiner als der erste Grenzwinkel $\delta 1$ ist und der Absolutwert der Differenz zwischen dem zweiten Phasenwinkel $\varphi 2$ und dem ersten Phasenwinkel $\varphi 1$ größer als 7° ist, wird für den in Figur 2 gezeigten Verlauf des Phasenwinkels im Verfahrensschritt H bestimmt, dass die im Betriebsflüssigkeitsbehälter 1 befindliche Betriebsflüssigkeit einen teilweise festen und einen teilweise flüssigen Aggregatzustand aufweist und somit teilweise vereist ist.

Die Verfahrensschritte E, F und G können alternativ auch direkt nach dem Verfahrensschritt C durchgeführt werden.

Wenn der Absolutwert der Differenz zwischen dem zweiten Phasenwinkel $\varphi 2$ und dem ersten Phasenwinkel $\varphi 1$ kleiner als der Grenzwinkel $\delta 2$ ist, dann wird in einem Verfahrensschritt I bestimmt, dass die im Betriebsflüssigkeitsbehälter 1 befindliche Betriebsflüssigkeit 50 einen flüssigen Aggregatzustand aufweist.

Aus dem in Figur 2 dargestellten Verlauf 93 des Phasenwinkels der Impedanz des Kondensators 60, 70 für die eine Temperatur von +3°C aufweisende Betriebsflüssigkeit ist ersichtlich, dass der erste Phasenwinkel $\varphi 1$ bei der unteren Grenzfrequenz fmin von 10 kHz in etwa -90° und der zweite Phasenwinkel $\varphi 2$ bei der oberen Grenzfrequenz fmax von 100 kHz in etwa -85,5° beträgt. Der Absolutwert der Differenz zwischen dem zweiten Phasenwinkel $\varphi 2$ und dem ersten Phasenwinkel $\varphi 1$ beträgt somit 4,5°. In dem dargestellten Ausführungsbeispiel beträgt der zweite Grenzwinkel $\delta 2$ 7°. Da der erste Phasenwinkel $\varphi 1$ kleiner als der erste Grenzwinkel $\delta 1$ ist und der Absolutwert der Differenz zwischen dem zweiten Phasenwinkel $\varphi 2$ und dem ersten Phasenwinkel $\varphi 1$ kleiner als 7° ist, wird für den in Figur 2 gezeigten Verlauf 93 des Phasenwinkels im Verfahrensschritt I bestimmt, dass die im Betriebsflüssigkeitsbehälter 1 befindliche Betriebsflüssigkeit einen flüssigen Aggregatzustand aufweist.

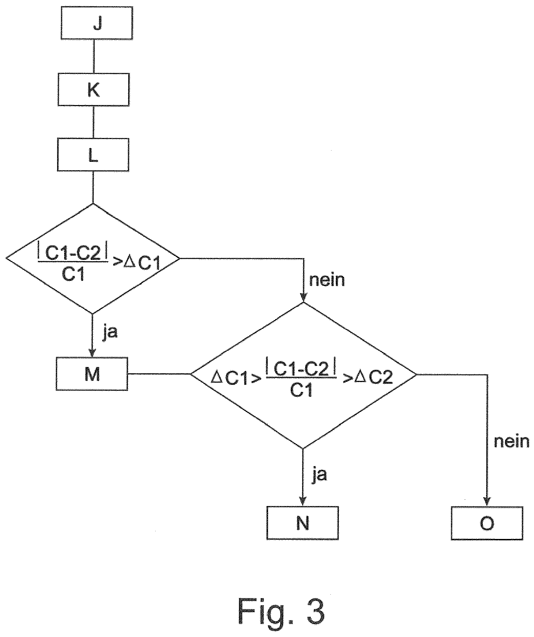

Die Auswerteeinrichtung 80 des in Figur 6 dargestellten Betriebsflüssigkeitsbehälters 1 ist ferner dazu ausgebildet, das Verfahren gemäß dem in Figur 3 dargestellten Flussablaufdiagramm auszuführen, das im Folgenden beschrieben wird.

In einem Verfahrensschritt J werden zumindest zwei unterschiedliche Wechselspannungen mit unterschiedlichen Frequenzen an den ersten Kondensator 60 und/oder an den zweiten Kondensator 70 angelegt. Dabei entspricht eine erste Frequenz einer ersten Wechselspannung einer unteren Grenzfrequenz fmin. Eine zweite Frequenz einer zweiten Wechselspannung entspricht einer oberen Grenzfrequenz fmax.

Anschließend werden in einem Verfahrensschritt K eine erste Kapazität C1 des ersten Kondensators und/oder des zweiten Kondensators 70 für die erste Frequenz bestimmt und gespeichert. Ferner wird im Verfahrensschritt K eine zweite Kapazität C2 des ersten Kondensators 60 und/oder des zweiten Kondensators 70 für die zweite Frequenz bestimmt und gespeichert.

Anschließend wird in einem Verfahrensschritt L eine relative Abweichung der zweiten Kapazität C2 von der ersten Kapazität C1 ermittelt. Im Verfahrensschritt L wird folglich ermittelt, um wie viel Prozent die zweite Kapazität C2 von der ersten Kapazität C1 abweicht.

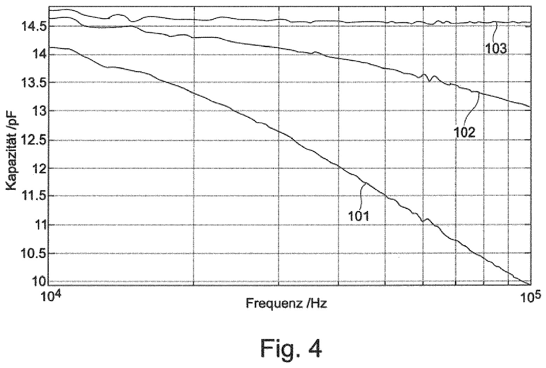

In Figur 4 sind drei unterschiedliche frequenzabhängige Kapazitätsverläufe des ersten Kondensators 60 und/oder des zweiten Kondensators 70 für eine wässrige Betriebsflüssigkeit 50 mit drei unterschiedlichen Temperaturen dargestellt. Dabei zeigt der Verlauf 101 einen frequenzabhängigen Kapazitätsverlauf des ersten Kondensators 60 und/oder des zweiten Kondensators 70 für die wässrige Betriebsflüssigkeit, die eine Temperatur von -15°C aufweist. Der Verlauf 102 zeigt den frequenzabhängigen Kapazitätsverlauf des ersten Kondensators 60 und/oder des zweiten Kondensators 70 für die Betriebsflüssigkeit, die eine Temperatur von -2°C aufweist. Der Verlauf 103 zeigt den frequenzabhängigen Kapazitätsverlauf des ersten Kondensators 60 und/oder des zweiten Kondensators 70 für die Betriebsflüssigkeit, die eine Temperatur von +3°C aufweist.

Aus Figur 4 ist ersichtlich, dass der Verlauf 101 der frequenzabhängigen Kapazität des Kondensators 60, 70 für die eine Temperatur von -15°C aufweisende wässrige Betriebsflüssigkeit 50 von einer ersten Kapazität C1 auf eine zweite Kapazität C2 abfällt. Dabei weist der Kondesator 60, 70 bei der unteren Grenzfrequenz fmin, die im dargestellten Ausführungsbeispiels 10 kHz beträgt, die erste Kapazität C1 von ca. 14 pF und bei der oberen Grenzfrequenz fmax, die im dargestellten Ausführungsbeispiels 100 kHz beträgt, die zweite Kapazität C2 von ca. 10 pF auf. Folglich beträgt die relative Abweichung von C1 zu C2 bei der eine Temperatur von -15°C aufweisenden Betriebsflüssigkeit ca. 28%.

Aus Figur 4 ist ferner ersichtlich, dass die frequenzabhängige Kapazität des Kondensators 60, 70 für die eine Temperatur von -2°C aufweisende wässrige Betriebsflüssigkeit 50 von einer ersten Kapazität C1 auf eine zweite Kapazität C2 abfällt. Dabei weist der Kondesator 60, 70 bei der unteren Grenzfrequenz fmin die erste Kapazität C1 von ca. 14,5 pF und bei der oberen Grenzfrequenz fmax die zweite Kapazität C2 von ca. 13 pF auf. Folglich beträgt die relative Abweichung von C1 zu C2 bei der eine Temperatur von -2°C aufweisenden Betriebsflüssigkeit ca. 10%.

Aus Figur 4 ist weiterhin ersichtlich, dass die frequenzabhängige Kapazität des Kondensators 60, 70 für die eine Temperatur von +3°C aufweisende wässrige Betriebsflüssigkeit 50 von einer ersten Kapazität C1 auf eine zweite Kapazität C2 abfällt. Dabei weist der Kondesator 60, 70 bei der unteren Grenzfrequenz fmin die erste Kapazität C1 von ca. 15 pF und bei der oberen Grenzfrequenz fmax die zweite Kapazität C2 von ca. 14,6 pF auf. Folglich beträgt die relative Abweichung von C1 zu C2 bei der eine Temperatur von +3°C aufweisenden Betriebsflüssigkeit ca. 2,6%.

Zurückkommend zu dem Verfahren gemäß dem in Figur 3 dargestellten Flussablaufdiagramm wird nach dem Verfahrensschritt L überprüft, ob die relative Abweichung der zweiten Kapazität C2 von der ersten Kapazität C1 größer als eine erste Kapazitätsabweichung $\Delta C1$ ist. Im Genaueren wird bestimmt, ob folgende Bedingung erfüllt ist:

$$\frac{|C1 - C2|}{C1} > \Delta C1$$

Wenn diese Bedingung erfüllt ist, wird in einem Verfahrensschritt M bestimmt, dass die im Betriebsflüssigkeitsbehälter 1 befindliche Betriebsflüssigkeit einen festen Aggregatzustand aufweist.

In dem beschriebenen Ausführungsbeispiel weist die erste Kapazitätsabweichung $\Delta C1$ einen Wert von 0,2 aus. Somit wird für den in Figur 4 dargestellten Kapazitätsverlauf 101 bestimmt, dass die im Betriebsflüssigkeitsbehälter 1 befindliche Betriebsflüssigkeit einen festen Aggregatzustand aufweist, da die relative Abweichung der zweiten Kapazität C2 von der ersten Kapazität C1 28% und somit 0,28 beträgt.

Wenn die Bedingung

$$\frac{|C1 - C2|}{C1} > \Delta C1$$

hingegen nicht erfüllt ist, wird überprüft, ob folgende Bedingung erfüllt ist:

$$\Delta C1 > \frac{|C1 - C2|}{C1} > \Delta C2$$

Dabei ist $\Delta C2$ eine zweite Kapazitätsabweichung, die im vorliegenden Ausführungsbeispiel 0,05 beträgt. Wenn diese Bedingung erfüllt ist, dann wird in einem Verfahrensschritt N bestimmt, dass die im Betriebsflüssigkeitsbehälterinnenraum 2 befindliche Betriebsflüssigkeit einen teilweise festen und einen teilweise flüssigen Aggregatzustand aufweist. Der Verfahrensschritt N wird folglich ausgeführt, wenn die relative Abweichung der zweiten Kapazität C2 von der ersten Kapazität C1 einen Wert zwischen der ersten Kapazitätsabweichung $\Delta C1$ und der zweiten Kapazitätsabweichung ΔC2 aufweist, wobei die zweite Kapazitätsabweichung ΔC2 kleiner als die erste Kapazitätsabweichung ΔC1 ist.

Somit wird für den in Figur 4 dargestellten Kapazitätsverlauf 102 im Verfahrensschritt N bestimmt, dass die im Betriebsflüssigkeitsbehälter 1 befindliche Betriebsflüssigkeit einen teilweise festen und einen teilweise flüssigen Aggregatzustand aufweist, da die relative Abweichung der zweiten Kapazität C2 von der ersten Kapazität C1 0,1 beträgt und somit die Bedingung 0,20 > 0,10 > 0,05 erfüllt ist.

Wenn die Bedingung

$$\Delta C1 > \frac{|C1 - C2|}{C1} > \Delta C2$$

hingegen nicht erfüllt ist, wird in einem Verfahrensschritt O bestimmt, dass die Betriebsflüssigkeitsbehälter 1 befindliche Betriebsflüssigkeit einen flüssigen Aggregatzustand aufweist.

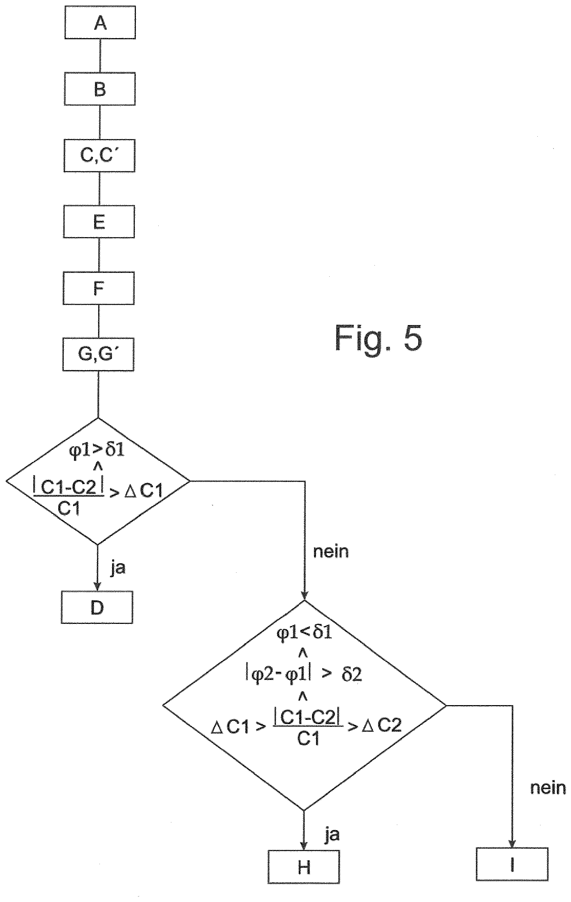

Die Auswerteeinrichtung 80 des in Figur 6 dargestellten Betriebsflüssigkeitsbehälters 1 ist ferner dazu ausgebildet, das Verfahren gemäß dem in Figur 5 dargestellten Flussablaufdiagramm auszuführen, das im Folgenden beschrieben wird. Dabei ergibt sich das Verfahren gemäß des in Figur 5 dargestellten Flussablaufdiagramms aus einer Kombination des Verfahrens gemäß des in Figur 1 dargestellten Flussablaufdiagramms und des Verfahrens gemäß des in Figur 3 dargestellten Flussablaufdiagramms.

In einem Verfahrensschritt A wird zumindest eine erste Wechselspannung an den ersten Kondensators 60 und/oder an den zweiten Kondensator 70 angelegt. Dabei entspricht eine erste Frequenz der ersten Wechselspannung einer unteren Grenzfrequenz fmin, die im dargestellten Ausführungsbeispiel 10 kHz beträgt.

In einem Verfahrensschritte B wird eine erste Impedanz des ersten Kondensators 60 und/oder des zweiten Kondensators 70 für die erste Frequenz bestimmt und gespeichert.

Anschließend wird in einem Verfahrensschritt C ein erster Phasenwinkel φ1 aus der ersten Impedanz bestimmt. In einem Verfahrensschritt C' wird eine erste Kapazität C1 des ersten Kondensators 60 und/oder des zweiten Kondensators 70 für die erste Frequenz bestimmt und gespeichert.

Anschließend wird in einem Verfahrensschritt E eine zweite Wechselspannung an den ersten Kondensators 60 und/oder an den zweiten Kondensator 70 angelegt, wobei eine zweite Frequenz der zweiten Wechselspannung einer oberen Grenzfrequenz fmax entspricht. In dem dargestellten Ausführungsbeispiel beträgt die obere Grenzfrequenz 100 kHz. Anschließend wird in einem Verfahrensschritt F eine zweite Impedanz des ersten Kondensators 60 und/oder des zweiten Kondensators 70 für die zweite Frequenz bestimmt und gespeichert. Dem Verfahrensschritt F nachfolgend wird in einem Verfahrensschritte G ein zweiter Phasenwinkel φ2 aus der zweiten Impedanz bestimmt. In einem Verfahrensschritt G' wird eine zweite Kapazität C2 des ersten Kondensators 60 und/oder des zweiten Kondensators 70 für die zweite Frequenz bestimmt und gespeichert.

Nach dem Verfahrensschritt G wird überprüft, ob der erste Phasenwinkel φ1 größer als der erste Grenzwinkel δ1, und ob die relative Abweichung der zweiten Kapazität C2 von der ersten Kapazität C1 größer als eine erste Kapazitätsabweichung ΔC1 ist. Wenn diese Bedingungen erfüllt sind, dann wird in einem Verfahrensschritt D bestimmt, dass die im Betriebsflüssigkeitsbehälter 1 befindliche Betriebsflüssigkeit 50 einen festen Aggregatzustand aufweist und folglich als Eis vorliegt.

Wenn diese Bedingungen hingegen nicht erfüllt sind, dann wird überprüft, ob der erste Phasenwinkel φ1 kleiner als der erste Grenzwinkel δ1, ob ein Absolutwert einer Differenz zwischen dem zweiten Phasenwinkel φ2 und dem ersten Phasenwinkel φ1 größer als ein zweiter Grenzwinkel δ2 ist, und ob die relative Abweichung der zweiten Kapazität C2 von der ersten Kapazität C1 kleiner als die erste Kapazitätsabweichung ΔC1 und größer als die zweite Kapazitätsabweichung ΔC2 ist.

Wenn diese Bedingungen erfüllt sind, dann wird in einem Verfahrensschritt H bestimmt, dass die im Betriebsflüssigkeitsbehälter 1 befindliche Betriebsflüssigkeit 50 teilweise einen festen und teilweise einen flüssigen Aggregatzustand aufweist. Wenn diese Bedingungen hingegen nicht erfüllt sind, dann wird in einem Verfahrensschritt I bestimmt, dass die im Betriebsflüssigkeitsbehälter 1 befindliche Flüssigkeit einen flüssigen Aggregatzustand aufweist.

Figur 7 zeigt eine stark vereinfachte Darstellung einer Schichtstruktur einer Behälterwand 10, 20, 30 des Betriebsflüssigkeitsbehälters 1. Bei der Behälterwand kann es sich um die Bodenwand 10 und/oder die Seitenwand 20 und/oder die Deckenwand 30 handeln. Es ist ersichtlich, dass die Behälterwand 10 mehrschichtig aufgebaut ist.

Im Folgenden wird die Schichtstruktur der Behälterwand 10, 20, 30 mit Bezug die Bodenwand 10 und mit Bezug auf den zweiten Kondensator 70 beschrieben. Jedoch kann auch die Seitenwand 20 und/oder die Deckenwand 30 eine entsprechende Schichtstruktur aufweisen. Ferner kann auch der erste Kondensator 60 auf die gleiche Art und Weise in der Behälterwand 10, 20, 30 eingebettet sein.

Es ist ersichtlich, dass die Bodenwand 10 eine Außenschicht 41, eine dem Betriebsflüssigkeitsbehälterinnenraum 2 zugewandte Innenschicht 45 und eine zwischen die Außenschicht 41 und die Innenschicht 45 angeordnete Haftschicht 44 aufweist. Die erste Elektrode 71 und die zweite Elektrode 72 des zweiten Kondensators 70 sind zwischen

13

der Außenschicht 41 und der Haftschicht 44 angeordnet. Die Bodenwand 10 weist ferner eine Abschirmschicht 42 und eine Isolationsschicht 43 auf, wobei die Abschirmschicht 42 zwischen der Außenschicht 41 und der ersten Elektroden 71 und der zweiten Elektrode 72 des zweiten Kondensators 70 angeordnet ist. Die Isolationsschicht 43 wiederum ist zwischen der Abschirmschicht 42 und den ersten und zweiten Elektroden 71, 72 des zweiten Kondensators 70 angeordnet.

Es ist ferner ersichtlich, dass die Bodenwand 10 eine Außenschicht 41, eine dem Betriebsflüssigkeitsbehälterinnenraum 2 zugewandte Innenschicht 45 und eine zwischen die Außenschicht 41 und die Innenschicht 45 angeordnete Haftschicht 44 aufweist. Die erste Elektrode 71 und die zweite Elektrode 72 des zweiten Kondensators 70 sind zwischen der Außenschicht 41 und der Haftschicht 44 angeordnet. Die Bodenwand 10 weist ferner eine Abschirmschicht 42 und eine Isolationsschicht 43 auf, wobei die Abschirmschicht 42 zwischen der Außenschicht 41 und den ersten und zweiten Elektroden 71, 72 des zweiten Kondensators 70 angeordnet ist. Die Isolationsschicht 43 wiederum ist zwischen der Abschirmschicht 42 und den ersten und zweiten Elektroden 71, 72 des zweiten Kondensators 70 angeordnet.

Figur 8A zeigt einen ersten Kondensator 60 in Alleinstellung in seitlicher Draufsicht. Bei dem dargestellten Ausführungsbeispiel ist ersichtlich, dass die erste Elektrode 61 des ersten Kondensators 60 entlang ihrer Längenerstreckung L eine gleichmäßige Breitenerstreckung B aufweist. Die zweite Elektrode 62 des ersten Kondensators 60 hingegen weist eine sich entlang der Längenerstreckung der zweiten Elektrode 62 veränderte Breitenerstreckung B auf. Es ist ersichtlich, dass die Breite der zweiten Elektrode 62 entlang ihrer Längenerstreckung L eine sich in Richtung der Bodenwand 10 vergrößernde Breitenerstreckung B aufweist.

Figur 8B zeigt ein weiteres Beispiel eines ersten Kondensators 60 gemäß einer weiteren Ausführungsform des Betriebsflüssigkeitsbehälters 1. Es ist ersichtlich, dass sowohl die erste Elektrode 61 als auch die zweite Elektrode 62 jeweils in unterschiedlichen Höhen, d. h. in unterschiedlichen Positionen hinsichtlich der Längenerstreckung L der ersten und zweiten Elektroden 61, 62 jeweils zwei Flügel 63 aufweisen, die sich entlang der Breitenerstreckung B der ersten und zweiten Elektroden 61, 62 erstrecken. Es ist ersichtlich, dass die jeweiligen Flügel 63 abgerundet sind.

Figur 8C wiederum zeigt einen ersten Kondensator 60 eines Betriebsflüssigkeitsbehälters 1 gemäß einer weiteren Ausführungsform. Auch der in Figur 8C dargestellte ersten Kondensator 60 ist derart ausgebildet, dass sowohl die erste Elektrode 61 als auch die zweite Elektrode 62 jeweils zwei Flügel 63 aufweisen, die sich in der Breitenerstreckung B der jeweiligen Elektroden 61, 62 erstrecken. Die jeweiligen Flügel 63 sind dabei in unterschiedlichen Höhen der jeweiligen Elektroden 61, 62 angeordnet.

Die vorliegende Erfindung ist auf die in den Figuren 8A bis 8C dargestellten Ausgestaltungen des ersten Kondensators 60 jedoch nicht beschränkt, solange mittels des ersten Kondensators 60 ein elektrisches Feld erzeugt wird, dass sich in den Betriebsflüssigkeitsbehälterinnenraum 2 erstreckt, sodass der Aggregatzustand einer wässrigen Betriebsflüssigkeit 50 mittels der Auswerteeinrichtung 80 ermittelt werden kann.

**Bezugszeichenliste**

| | |
|---|---|
| 1 | Betriebsflüssigkeitsbehälter |
| 2 | Betriebsflüssigkeitsbehälterinnenraum |
| 10 | Bodenwand (des Betriebsflüssigkeitsbehälters) |
| 11 | Erhebung (der Bodenwand) |
| 20 | Seitenwand (des Betriebsflüssigkeitsbehälters) |
| 30 | Deckenwand |
| 41 | Außenschicht (der Bodenwand / der Seitenwand) |
| 42 | Abschirmschicht (der Bodenwand / der Seitenwand) |
| 43 | Isolationsschicht (der Bodenwand / der Seitenwand) |
| 44 | Haftschicht (der Bodenwand / der Seitenwand) |
| 45 | Innenschicht (der Bodenwand / der Seitenwand) |
| 50 | Betriebsflüssigkeit |
| 60 | erster Kondensator |
| 61 | erste Elektrode (des ersten Kondensators) |
| 62 | zweite Elektrode (des ersten Kondensators) |
| 63 | Flügel (der ersten Elektrode und/oder der zweiten Elektrode) |
| 70 | zweiter Kondensator |
| 71 | erste Elektrode (des zweiten Kondensators) |
| 72 | zweite Elektrode (des zweiten Kondensators) |
| 80 | Auswerteeinrichtung |
| 91 | frequenzabhängiger Phasenverlauf für eine wässrige Betriebsflüssigkeit mit einer Temperatur von -15°C |

| 92 | frequenzabhängiger Phasenverlauf für eine wässrige Betriebsflüssigkeit mit einer Temperatur von -2°C |
| 93 | frequenzabhängiger Phasenverlauf für eine wässrige Betriebsflüssigkeit mit einer Temperatur von +3°C |
| 101 | frequenzabhängiger Kapazitätsverlauf für eine wässrige Betriebsflüssigkeit mit einer Temperatur von -15°C |
| 102 | frequenzabhängiger Kapazitätsverlauf für eine wässrige Betriebsflüssigkeit mit einer Temperatur von -2°C |
| 103 | frequenzabhängiger Kapazitätsverlauf für eine wässrige Betriebsflüssigkeit mit einer Temperatur von +3°C |
| L | Längserstreckung (der Elektroden des Messkondensators) |
| B | Breitenerstreckung (der Elektroden des Messkondensators) |
| C1 | erste Kapazität (des Kondensators) |
| C2 | zweite Kapazität (des Kondensators) |
| fmin | untere Grenzfrequenz |
| fmax | obere Grenzfrequenz |
| $\varphi 1$ | erster Phasenwinkel |
| $\varphi 2$ | zweiter Phasenwinkel |
| $\delta 1$ | erster Grenzwinkel |
| $\delta 2$ | zweiter Grenzwinkel |
| $\Delta C1$ | erste Kapazitätsabweichung |
| $\Delta C2$ | zweite Kapazitätsabweichung |

**Patentansprüche**

1. Verfahren zum Bestimmen eines Aggregatzustandes einer wässrigen Betriebsflüssigkeit in einem Betriebsflüssigkeitsbehälter (1) für ein Kraftfahrzeug, wobei der Betriebsflüssigkeitsbehälter (1) zumindest einen an einer Behälterwand (10, 20, 30) des Betriebsflüssigkeitsbehälters (1) befestigten Kondensator (60, 70) mit einer ersten Elektrode (61, 71) und einer dieser gegenüberliegenden zweiten Elektrode (62, 72) aufweist, wobei das Verfahren die folgenden Verfahrensschritte aufweist:

- Anlegen (A) von zumindest einer ersten Wechselspannung an den Kondensator (60, 70), wobei eine erste Frequenz der ersten Wechselspannung einer unteren Grenzfrequenz (fmin) entspricht;
- Bestimmen und Speichern (B) einer ersten Impedanz des Kondensators (60, 70) für die erste Frequenz;
- Bestimmen (C) eines ersten Phasenwinkels ($\varphi 1$) aus der ersten Impedanz;
- Bestimmen (D), dass die im Betriebsflüssigkeitsbehälter (1) befindliche Betriebsflüssigkeit (50) einen festen Aggregatzustand aufweist, wenn der erste Phasenwinkel ($\phi 1$) größer als ein erster Grenzwinkel ($\delta 1$) ist;
- Anlegen (E) einer zweiten Wechselspannung an den Kondensator (60, 70), wobei eine zweite Frequenz der zweiten Wechselspannung einer oberen Grenzfrequenz (fmax) entspricht;
- Bestimmen und Speichern (F) einer zweiten Impedanz des Kondensators (60, 70) für die zweite Frequenz;
- Bestimmen (G) eines zweiten Phasenwinkels ($\varphi 2$) aus der zweiten Impedanz; und
- Bestimmen (H), dass die im Betriebsflüssigkeitsbehälter (1) befindliche Betriebsflüssigkeit (50) teilweise einen festen und teilweise einen flüssigen Aggregatzustand aufweist, wenn der erste Phasenwinkel ($\varphi 1$) kleiner als der erste Grenzwinkel ($\delta 1$) und eine Differenz zwischen dem zweiten Phasenwinkel ($\varphi 2$) und dem ersten Phasenwinkel ($\phi 1$) größer als ein zweiter Grenzwinkel ($\delta 2$) ist.

2. Verfahren nach Anspruch 1, **gekennzeichnet durch** folgenden Verfahrensschritt:

- Bestimmen (I), dass die im Betriebsflüssigkeitsbehälter (1) befindliche Betriebsflüssigkeit (50) einen flüssigen Aggregatzustand aufweist, wenn der erste Phasenwinkel ($\phi 1$) kleiner als der erste Grenzwinkel ($\delta 1$) und eine Differenz zwischen dem zweiten Phasenwinkel ($\varphi 2$) und dem ersten Phasenwinkel ($\phi 1$) kleiner als der zweite Grenzwinkel ($\delta 2$) ist.

3. Verfahren nach einem der Ansprüche 1 oder 2, **gekennzeichnet durch** die folgenden Verfahrensschritte:

- Bestimmen (C') einer ersten Kapazität (C1) des Kondensators (60, 70) aus der ersten Impedanz;
- Bestimmen (G') einer zweiten Kapazität (C2) des Kondensators (60, 70) aus der zweiten Impedanz
- Ermitteln (L) einer relativen Abweichung der zweiten Kapazität (C2) von der ersten Kapazität (C1); und
- Bestimmen (D), dass die im Betriebsflüssigkeitsbehälter (1) befindliche Betriebsflüssigkeit (50) einen festen Aggregatzustand aufweist, wenn die relative Abweichung der zweiten Kapazität (C2) von der ersten Kapazität (C1) größer als eine erste Kapazitätsabweichung ($\Delta C1$) ist.

**4.** Verfahren nach Anspruch 3, **gekennzeichnet durch** folgenden Verfahrensschritt:

- Bestimmen (H), dass die im Betriebsflüssigkeitsbehälter (1) befindliche Betriebsflüssigkeit (50) teilweise einen festen und teilweise einen flüssigen Aggregatzustand aufweist, wenn die relative Abweichung der zweiten Kapazität (C2) von der ersten Kapazität (C1) kleiner als die erste Kapazitätsabweichung ($\Delta$C1) und größer als eine zweite Kapazitätsabweichung ($\Delta$C2) ist.

**5.** Verfahren nach einem der Ansprüche 3 bis 4, **gekennzeichnet durch** folgenden Verfahrensschritt:

- Bestimmen (I), dass die im Betriebsflüssigkeitsbehälter (1) befindliche Betriebsflüssigkeit (50) einen flüssigen Aggregatzustand aufweist, wenn die relative Abweichung der zweiten Kapazität (C2) von der ersten Kapazität (C1) kleiner als eine zweite Kapazitätsabweichung ($\Delta$C2) ist.

**6.** Verfahren zum Bestimmen eines Aggregatzustandes einer wässrigen Betriebsflüssigkeit in einem Betriebsflüssigkeitsbehälter (1) für ein Kraftfahrzeug, wobei der Betriebsflüssigkeitsbehälter (1) zumindest einen an einer Behälterwand (10, 20, 30) des Betriebsflüssigkeitsbehälters (1) befestigten Kondensator (60, 70) mit einer ersten Elektrode (61, 71) und einer dieser gegenüberliegenden zweiten Elektrode (62, 72) aufweist, wobei das Verfahren die folgenden Verfahrensschritte aufweist:

- Anlegen (J) von zumindest zwei unterschiedlichen Wechselspannungen an den Kondensator (60, 70), wobei eine erste Frequenz einer ersten Wechselspannung einer unteren Grenzfrequenz (fmin) und eine zweite Frequenz einer zweiten Wechselspannung einer oberen Grenzfrequenz (fmax) entspricht;
- Bestimmen und Speichern (K) einer ersten Kapazität (C1) des Kondensators (60, 70) für die erste Frequenz und einer zweiten Kapazität (C2) des Kondensators (60, 70) für die zweite Frequenz;
- Ermitteln (L) einer relativen Abweichung der zweiten Kapazität (C2) von der ersten Kapazität (C1);
- Bestimmen (M), dass die im Betriebsflüssigkeitsbehälter (1) befindliche Betriebsflüssigkeit (50) einen festen Aggregatzustand aufweist, wenn die relative Abweichung der zweiten Kapazität (C2) von der ersten Kapazität (C1) größer als eine erste Kapazitätsabweichung ($\Delta$C1) ist; und
- Bestimmen (N), dass die im Betriebsflüssigkeitsbehälter (1) befindliche Betriebsflüssigkeit (50) teilweise einen festen und teilweise einen flüssigen Aggregatzustand aufweist, wenn die relative Abweichung der zweiten Kapazität (C2) von der ersten Kapazität (C1) kleiner als die erste Kapazitätsabweichung ($\Delta$C1) und größer als eine zweite Kapazitätsabweichung ($\Delta$C2) ist.

**7.** Verfahren nach Anspruch 6, **gekennzeichnet durch** folgenden Verfahrensschritt:

- Bestimmen (O), dass die im Betriebsflüssigkeitsbehälter (1) befindliche Betriebsflüssigkeit (50) einen flüssigen Aggregatzustand aufweist, wenn die relative Abweichung der zweiten Kapazität (C2) von der ersten Kapazität (C1) kleiner als eine zweite Kapazitätsabweichung ($\Delta$C2) ist.

**8.** Betriebsflüssigkeitsbehälter (1) mit den folgenden Merkmalen:

- ein Betriebsflüssigkeitsbehälterinnenraum (2) ist von einer Deckenwand (30), einer Bodenwand (10) und einer die Bodenwand (10) mit der Deckenwand (30) verbindenden Seitenwand (20) begrenzt;
- der Betriebsflüssigkeitsbehälter (1) weist zumindest einen an einer Behälterwand (10, 20, 30) des Betriebsflüssigkeitsbehälters (1) befestigten Kondensator (60, 70) mit einer ersten Elektrode (61, 71) und einer zweiten Elektrode (62, 72) auf;
- der Betriebsflüssigkeitsbehälter (1) weist eine elektronische Auswerteeinrichtung (80) auf, die mit der ersten Elektrode (61, 71) und mit der zweiten Elektrode (62, 72) elektrisch verbunden ist, wobei der Betriebsflüssigkeitsbehälter (1) **dadurch gekennzeichnet ist, dass** die Auswerteeinrichtung (80) dazu ausgebildet ist ein Verfahren nach zumindest einem der Ansprüche 1 bis 7 auszuführen.

**9.** Betriebsflüssigkeitsbehälter (1) nach Anspruch 8, **dadurch gekennzeichnet, dass** der Kondensator (60, 70) in der Behälterwand (10, 20, 30) eingebettet ist.

**10.** Betriebsflüssigkeitsbehälter (1) nach einem der Ansprüche 8 bis 9, **gekennzeichnet durch** die folgenden Merkmale:

- die Bodenwand (10) weist eine sich in den Betriebsflüssigkeitsbehälterinnenraum (2) erstreckende Erhebung (11) auf; und

- die erste Elektrode (71) und die zweite Elektrode (72) des Kondensators (70) sind in der Erhebung (11) eingebettet.

11. Betriebsflüssigkeitsbehälter (1) nach einem der Ansprüche 8 bis 10, **gekennzeichnet durch** die folgenden Merkmale:

- die Behälterwand (10, 20, 30) weist eine Außenschicht (41), eine dem Betriebsflüssigkeitsbehälterinnenraum (2) zugewandte Innenschicht (45) und eine zwischen diese angeordnete Haftschicht (44) auf;
- die erste Elektrode (61, 71) und die zweite Elektrode (62, 72) des zumindest einen Kondensators (60) sind zwischen der Außenschicht (41) und der Haftschicht (44) angeordnet.

12. Betriebsflüssigkeitsbehälter (1) nach einem der Ansprüche 8 bis 11, **gekennzeichnet durch** die folgenden Merkmale:

- die Behälterwand (10, 20, 30) weist eine Abschirmschicht (42) und eine Isolationsschicht (43) auf;
- die Abschirmschicht (42) ist zwischen der Außenschicht (41) und der ersten und zweiten Elektroden (61, 62; 71, 72) angeordnet; und
- die Isolationsschicht (43) ist zwischen der Abschirmschicht (42) und den ersten und zweiten Elektroden (61, 62; 71, 72) angeordnet.

13. Betriebsflüssigkeitsbehälter (1) nach Anspruch 12, **dadurch gekennzeichnet, dass** die Isolationsschicht (43) die gleiche dielektrische Leitfähigkeit wie die Innenschicht (45) und/oder die Außenschicht (41) aufweist.

**Claims**

1. Method for determining an aggregate state of an aqueous operating liquid in an operating liquid container (1) for a motor vehicle, wherein the operating liquid container (1) has at least one capacitor (60, 70) which is fastened to a container wall (10, 20, 30) of the operating liquid container (1) and has a first electrode (61, 71) and a second electrode (62, 72) opposite said first electrode, wherein the method comprises the following method steps:

- Applying (A) at least a first alternating voltage to the capacitor (60, 70), wherein a first frequency of the first alternating voltage corresponds to a lower frequency limit (fmin);
- determining and storing (B) a first impedance of the capacitor (60, 70) for the first frequency;
- determining (C) a first phase angle ($\varphi$1) from the first impedance;
- determining (D) that the operating liquid (50) located in the operating liquid container (1) is in a solid aggregate state when the first phase angle ($\varphi$1) is greater than a first critical angle ($\delta$1);
- Applying (E) a second alternating voltage to the capacitor (60, 70), wherein a second frequency of the second alternating voltage corresponds to an upper frequency limit (fmax);
- determining and storing (F) a second impedance of the capacitor (60, 70) for the second frequency;
- determining (G) a second phase angle ($\varphi$2) from the second impedance; and
- determining (H) that the operating liquid (50) located in the operating liquid container (1) is partially in a solid and partially in a liquid aggregate state when the first phase angle ($\varphi$1) is smaller than the first critical angle ($\delta$1) and a difference between the second phase angle ($\varphi$2) and the first phase angle ($\varphi$1) is greater than a second critical angle ($\delta$2).

2. Method according to claim 1, **characterized by** the following method step:

- Determining (I) that the operating liquid (50) located in the operating liquid container (1) is in a liquid aggregate state when the first phase angle ($\varphi$1) is smaller than the first critical angle ($\delta$1) and a difference between the second phase angle ($\varphi$2) and the first phase angle ($\varphi$1) is smaller than the second critical angle ($\delta$2).

3. Method according to one of claims 1 or 2, **characterized by** the following method steps:

- Determining (C') a first capacitance (C1) of the capacitor (60, 70) from the first impedance;
- determining (G') a second capacitance (C2) of the capacitor (60, 70) from the second impedance;
- determining (L) a relative deviation of the second capacitance (C2) from the first capacitance (C1); and
- determining (D) that the operating liquid (50) located in the operating liquid container (1) is in a solid aggregate state when the relative deviation of the second capacitance (C2) from the first capacitance (C1) is greater than a first capacitance deviation (ΔC1).

4. Method according to claim 3, **characterized by** the following method step:

- Determining (H) that the operating liquid (50) located in the operating liquid container (1) is partially in a solid and partially in a liquid aggregate state when the relative deviation of the second capacitance (C2) from the first capacitance (C1) is smaller than the first capacitance deviation (ΔC1) and greater than a second capacitance deviation (ΔC2).

5. Method according to one of claims 4 to 5, **characterized by** the following method step:

- Determining (I) that the operating liquid (50) located in the operating liquid container (1) is in a liquid aggregate state when the relative deviation of the second capacitance (C2) from the first capacitance (C1) is smaller than a second capacitance deviation (ΔC2).

6. Method for determining an aggregate state of an aqueous operating liquid in an operating liquid container (1) for a motor vehicle, wherein the operating liquid container (1) has at least one capacitor (60, 70) which is fastened to a container wall (10, 20, 30) of the operating liquid container (1) and has a first electrode (61, 71) and a second electrode (62, 72) opposite said first electrode, wherein the method comprises the following method steps:

- Applying (J) at least two different alternating voltages to the capacitor (60, 70), wherein a first frequency of a first alternating voltage corresponds to a lower frequency limit (fmin) and a second frequency of a second alternating voltage corresponds to an upper frequency limit (fmax);
- determining and storing (K) a first capacitance (C1) of the capacitor (60, 70) for the first frequency and a second capacitance (C2) of the capacitor (60, 70) for the second frequency;
- determining (L) a relative deviation of the second capacitance (C2) from the first capacitance (C1);
- determining (M) that the operating liquid (50) located in the operating liquid container (1) is in a solid aggregate state when the relative deviation of the second capacitance (C2) from the first capacitance (C1) is greater than a first capacitance deviation (ΔC1); and
- Determining (N) that the operating liquid (50) located in the operating liquid container (1) is partially in a solid and partially in a liquid aggregate state when the relative deviation of the second capacitance (C2) from the first capacitance (C1) is smaller than the first capacitance deviation (ΔC1) and greater than a second capacitance deviation (ΔC2).

7. Method according to claim 6, **characterized by** the following method step:

- Determining (0) that the operating liquid (50) located in the operating liquid container (1) is in a liquid aggregate state when the relative deviation of the second capacitance (C2) from the first capacitance (C1) is smaller than a second capacitance deviation (ΔC2).

8. Operating liquid container (1) having the following features:

- An interior (2) of the operating liquid container is delimited by a ceiling wall (30), a bottom wall (10), and a sidewall (20) which connects the bottom wall (10) to the ceiling wall (30);
- the operating liquid container (1) has at least one capacitor (60, 70) fastened to a container wall (10, 20, 30) of the operating liquid container (1) with a first electrode (61, 71) and a second electrode (62, 72);
- the operating liquid container (1) has an electronic evaluator (80) which is electrically connected to the first electrode (61, 71) and to the second electrode (62, 72), wherein the operating liquid container (1) is **characterized in that** the evaluator (80) is designed to carry out a method according to at least one of claims 1 to 7.

9. Operating liquid container (1) according to claim 8, **characterized in that** the capacitor (60, 70) is embedded in the container wall (10, 20, 30).

10. Operating liquid container (1) according to one of claims 8 to 9, **characterized by** the following features:

- The bottom wall (10) has an elevation (11) extending into the interior (2) of the operating liquid container; and
- the first electrode (71) and the second electrode (72) of the capacitor (70) are embedded in the elevation (11).

**11.** Operating liquid container (1) according to one of claims 8 to 10, **characterized by** the following features:

- The container wall (10, 20, 30) comprises an outer layer (41), an inner layer (45) facing the interior (2) of the operating liquid container, and a bonding layer (44) arranged in between;
- the first electrode (61, 71) and the second electrode (62, 72) of the at least one capacitor (60) are arranged between the outer layer (41) and the bonding layer (44).

**12.** Operating liquid container (1) according to one of claims 8 to 11, **characterized by** the following features:

- The container wall (10, 20, 30) has a shielding layer (42) and an insulating layer (43);
- the shielding layer (42) is arranged between the outer layer (41) and the first and second electrodes (61, 62; 71, 72); and
- the insulating layer (43) is arranged between the shielding layer (42) and the first and second electrodes (61, 62; 71, 72) .

**13.** Operating liquid container (1) according to claim 12, **characterized in that** the insulating layer (43) has the same dielectric conductivity as the inner layer (45) and/or the outer layer (41).

**Revendications**

**1.** Procédé permettant de déterminer un état d'agrégation d'un liquide de fonctionnement aqueux dans un réservoir de liquide de fonctionnement (1) pour véhicule automobile, le réservoir de liquide de fonctionnement (1) présentant au moins un condensateur (60, 70) fixé à une paroi de réservoir (10, 20, 30) du réservoir de liquide de fonctionnement (1) et comportant une première électrode (61, 71) et une seconde électrode (62, 72) opposée à la première électrode, le procédé présentant les étapes de procédé suivantes :

- application (A) d'au moins une première tension alternative au condensateur (60, 70), une première fréquence de la première tension alternative correspondant à une fréquence limite inférieure (fmin) ;
- détermination et stockage (B) d'une première impédance du condensateur (60, 70) pour la première fréquence ;
- détermination (C) d'un premier angle de phase ($\varphi$1) à partir de la première impédance ;
- détermination (D) selon laquelle le liquide de fonctionnement (50) se trouvant dans le réservoir de liquide de fonctionnement (1) présente un état d'agrégation solide si le premier angle de phase ($\varphi$1) est supérieur à un premier angle limite ($\delta$1) ;
- application (E) d'une seconde tension alternative au condensateur (60, 70), une seconde fréquence de la seconde tension alternative correspondant à une fréquence limite supérieure (fmax) ;
- détermination et stockage (F) d'une seconde impédance du condensateur (60, 70) pour la seconde fréquence ;
- détermination (G) d'un second angle de phase ($\varphi$2) à partir de la seconde impédance ; et
- détermination (H) selon laquelle le liquide de fonctionnement (50) se trouvant dans le réservoir de liquide de fonctionnement (1) présente partiellement un état d'agrégation solide et partiellement un état d'agrégation liquide si le premier angle de phase ($\varphi$1) est inférieur au premier angle limite ($\delta$1) et qu'une différence entre le second angle de phase ($\varphi$2) et le premier angle de phase ($\varphi$1) est supérieure à un second angle limite ($\delta$2).

**2.** Procédé selon la revendication 1, **caractérisé par** l'étape de procédé suivante :

- détermination (I) selon laquelle le liquide de fonctionnement (50) se trouvant dans le réservoir de liquide de fonctionnement (1) présente un état d'agrégation liquide si le premier angle de phase ($\varphi$1) est inférieur au premier angle limite ($\delta$1) et qu'une différence entre le second angle de phase ($\varphi$2) et le premier angle de phase ($\varphi$1) est inférieure au second angle limite ($\delta$2).

**3.** Procédé selon l'une des revendications 1 ou 2, **caractérisé par** les étapes de procédé suivantes :

- détermination (C') d'une première capacité (C1) du condensateur (60, 70) à partir de la première impédance ;
- détermination (G') d'une seconde capacité (C2) du condensateur (60, 70) à partir de la seconde impédance
- détermination (L) d'un écart relatif de la seconde capacité (C2) par rapport à la première capacité (C1) ; et
- détermination (D) selon laquelle le liquide de fonctionnement (50) se trouvant dans le réservoir de liquide de fonctionnement (1) présente un état d'agrégation solide si l'écart relatif de la seconde capacité (C2) par rapport à la première capacité (C1) est supérieur à un premier écart de capacité ($\Delta$C1).

**4.** Procédé selon la revendication 3, **caractérisé par** l'étape de procédé suivante :

- détermination (H) selon laquelle le liquide de fonctionnement (50) se trouvant dans le réservoir de liquide de fonctionnement (1) présente partiellement un état d'agrégation solide et partiellement un état d'agrégation liquide si l'écart relatif de la seconde capacité (C2) par rapport à la première capacité (C1) est inférieur au premier écart de capacité (C1) et supérieur à un second écart de capacité (ΔC2).

**5.** Procédé selon l'une des revendications 3 à 4, **caractérisé par** l'étape de procédé suivante :

- détermination (I) selon laquelle le liquide de fonctionnement (50) se trouvant dans le réservoir de liquide de fonctionnement (1) présente un état d'agrégation liquide si l'écart relatif de la seconde capacité (C2) par rapport à la première capacité (C1) est inférieur à un second écart de capacité (ΔC2).

**6.** Procédé permettant de déterminer un état d'agrégation d'un liquide de fonctionnement aqueux dans un réservoir de liquide de fonctionnement (1) pour véhicule automobile, le réservoir de liquide de fonctionnement (1) présentant au moins un condensateur (60, 70) fixé à une paroi de réservoir (10, 20, 30) du réservoir de liquide de fonctionnement (1) et comportant une première électrode (61, 71) et une seconde électrode (62, 72) opposée à la première électrode, le procédé présentant les étapes de procédé suivantes :

- application (J) d'au moins deux tensions alternatives différentes au condensateur (60, 70), une première fréquence correspondant à une première tension alternative d'une fréquence limite inférieure (fmin) et une seconde fréquence correspondant à une seconde tension alternative d'une fréquence limite supérieure (fmax) ;
- détermination et stockage (K) d'une première capacité (C1) du condensateur (60, 70) pour la première fréquence et d'une seconde capacité (C2) du condensateur (60, 70) pour la seconde fréquence ;
- détermination (L) d'un écart relatif de la seconde capacité (C2) par rapport à la première capacité (C1) ;
- détermination (M) selon laquelle le liquide de fonctionnement (50) se trouvant dans le réservoir de liquide de fonctionnement (1) présente un état d'agrégation solide si l'écart relatif de la seconde capacité (C2) par rapport à la première capacité (C1) est supérieur à un premier écart de capacité (ΔC1) ; et
- détermination (N) selon laquelle le liquide de fonctionnement (50) se trouvant dans le réservoir de liquide de fonctionnement (1) présente partiellement un état d'agrégation solide et partiellement un état d'agrégation liquide si l'écart relatif de la seconde capacité (C2) par rapport à la première capacité (C1) est inférieur au premier écart de capacité (C1) et supérieur à un second écart de capacité (ΔC2).

**7.** Procédé selon la revendication 6, **caractérisé par** l'étape de procédé suivante :

- détermination (O) selon laquelle le liquide de fonctionnement (50) se trouvant dans le réservoir de liquide de fonctionnement (1) présente un état d'agrégation liquide si l'écart relatif de la seconde capacité (C2) par rapport à la première capacité (C1) est inférieur à un second écart de capacité (ΔC2).

**8.** Réservoir de liquide de fonctionnement (1) comportant les caractéristiques suivantes :

- un espace intérieur de réservoir de liquide de fonctionnement (2) est délimité par une paroi supérieure (30), une paroi inférieure (10) et une paroi latérale (20) reliant la paroi inférieure (10) à la paroi supérieure (30) ;
- le réservoir de liquide de fonctionnement (1) présente au moins un condensateur (60, 70) fixé à une paroi de réservoir (10, 20, 30) du réservoir de liquide de fonctionnement (1) et comportant une première électrode (61, 71) et une seconde électrode (62, 72) ;
- le réservoir de liquide de fonctionnement (1) présente un dispositif d'évaluation (80) électronique qui est relié électriquement à la première électrode (61, 71) et à la seconde électrode (62, 72),

dans lequel le réservoir de liquide de fonctionnement (1) est **caractérisé en ce que** le dispositif d'évaluation (80) est configuré pour exécuter un procédé selon au moins l'une des revendications 1 à 7.

**9.** Réservoir de liquide de fonctionnement (1) selon la revendication 8, **caractérisé en ce que** le condensateur (60, 70) est incorporé dans la paroi de réservoir (10, 20, 30).

**10.** Réservoir de liquide de fonctionnement (1) selon l'une des revendications 8 à 9, **caractérisé par** les caractéristiques suivantes :

- la paroi inférieure (10) présente une élévation (11) s'étendant dans l'espace intérieur de réservoir de liquide de fonctionnement (2) ; et
- la première électrode (71) et la seconde électrode (72) du condensateur (70) sont incorporées dans l'élévation (11).

**11.** Réservoir de liquide de fonctionnement (1) selon l'une des revendications 8 à 10, **caractérisé par** les caractéristiques suivantes :

- la paroi de réservoir (10, 20, 30) présente une couche externe (41), une couche interne (45) tournée vers l'espace intérieur de réservoir de liquide de fonctionnement (2) et une couche adhésive (44) disposée entre celles-ci ;
- la première électrode (61, 71) et la seconde électrode (62, 72) de l'au moins un condensateur (60) sont disposées entre la couche externe (41) et la couche adhésive (44).

**12.** Réservoir de liquide de fonctionnement (1) selon l'une des revendications 8 à 11, **caractérisé par** les caractéristiques suivantes :

- la paroi de réservoir (10, 20, 30) présente une couche de blindage (42) et une couche d'isolation (43) ;
- la couche de blindage (42) est disposée entre la couche externe (41) et les première et seconde électrodes (61, 62 ; 71, 72) ; et
- la couche d'isolation (43) est disposée entre la couche de blindage (42) et les première et seconde électrodes (61, 62 ; 71, 72).

**13.** Réservoir de liquide de fonctionnement (1) selon la revendication 12, **caractérisé en ce que** la couche d'isolation (43) présente la même conductibilité diélectrique que la couche interne (45) et/ou la couche externe (41).

Fig. 1

Fig. 2

Fig. 3

Fig. 4

Fig. 5

Fig. 6

Fig. 7

Fig. 8A

Fig. 8B

Fig. 8C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2009110849 A
- JP H075135 A
- DE 102012020335 A1
- JP 2004184192 A
- EP 1596188 A2

**In der Beschreibung aufgeführte Nicht-Patentliteratur**

- **FLATSCHER M et al.** Measurement of complex dielectric material properties of ice using electrical impedance spectroscopy. *2016 IEEE Sensors,* 30. Oktober 2016, 1-3